# EUROPEAN PATENT APPLICATION

(11) **EP 4 746 471 A1**
(43) Date of publication of application: **20.05.2026**
(21) Application number: 24213364.3
(22) Date of filing: 15.11.2024
(51) Int. Cl.: H04W 8/26

(54) **INTERNET OF THINGS DEVICE AND COMMUNICATION NODE**

(71) Applicant: Panasonic Intellectual Property Corporation of America, Torrance, CA 90504 (US)
(72) Inventor: DHANANJAYA, Harshith, 63225 Langen (DE); SUZUKI, Hidetoshi, Osaka, 571-8501 (JP); KUANG, Quan, 63225 Langen (DE)
(74) Representative: Grünecker Patent- und Rechtsanwälte PartG mbB

(57) **Abstract**

Provided is an Internet of Things, loT, device associated with a first device identifier unique among a plurality of device identifiers associated with a respective plurality of loT devices, wherein the loT device is included in a group associated with a group identifier, comprising a transceiver which, in operation, receives a first message from a communication node, indicating the group identifier; and circuitry which, in operation, determines a second device identifier, the second device identifier having a smaller data size than the first device identifier, wherein the transceiver, in operation, transmits a second message indicating the second device identifier to the communication node.

## Description

### BACKGROUND

### 1. Technical field

The present disclosure relates to an loT device, a communication node, or example, a base station or an intermediate node connected to a base station, and methods for communication.

### 2. Description of the Related Art

The Internet of things (loT) market is a major source of revenue for future wireless technology and is a steadily growing market. Building, commercial, health, agriculture, infrastructure, and industries are some of the key sectors targeted by the loT market. Energy harvesting technology is a key to the success of the loT market as it can considerably reduce device operational costs. Ambient loT devices (energy harvesting devices) harvest energy from natural or ambient sources, for example, electromagnetic, solar, thermal or mechanical (pressure, vibration) sources, and operate either with a small battery or without battery. The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. Integration of ambient loT (A-loT) devices in communication networks, particularly, 5G and future technologies, is an important demanding task, particularly, since A-loT devices lack RRC states and ARQ and HARQ transmission protocols that ensure reliable data delivery, A-loT devices have limited power available resulting in reduced time periods of communication capability and A-loT devices are configured with specifically designed new operation states. A-loT devices may support two types of services, namely "inventory" and "command", wherein a detailed specification thereof is still to be decided upon. However, "inventory" service relates to a service, where an A-loT device provides its device identifier when triggered, whereas "command" service relates to a service where an A-loT device may be instructed to provide certain data. A random access procedure may be based on a 2-step approach or a 3-step approach. However, during the random access procedure, a device ID of the A-loT device may be transmitted, resulting in issues related to security and the limited processing capabilities of an A-loT device.

### SUMMARY

One non-limiting and exemplary embodiment facilitates an Internet of Things, loT, device associated with a first device identifier unique among a plurality of device identifiers associated with a respective plurality of loT devices, wherein the loT device is included in a group associated with a group identifier, comprising a transceiver which, in operation, receives a first message from a communication node, indicating the group identifier; and circuitry which, in operation, determines a second device identifier, the second device identifier having a smaller data size than the first device identifier, wherein the transceiver, in operation, transmits a second message indicating the second device identifier to the communication node.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF THE FIGURES

In the following exemplary embodiments are described in more detail with reference to the attached figures and drawings.
- **Fig. 1**: shows an exemplary architecture for a 3GPP NR system;
- **Fig. 2**: exemplarily illustrates the interplay between an A-IoT device, a reader or base station, and an A-IoT application;
- **Fig. 3**: illustrates a node-A-IoT device topology;
- **Fig. 4**: illustrates another node-A-IoT device topology;
- **Fig. 5**: illustrates transmissions between a reader and an A-IoT device according to services "inventory" and "command";
- **Fig. 6**: illustrates an overview of a 5G procedure for authentication;
- **Fig. 7**: illustrates an overview of a 5G Authentication and Key Agreement (AKA) procedure for authentication;
- **Fig. 8a**: illustrates an exemplary approach for key derivation at the core network;
- **Fig. 8b**: illustrates an exemplary approach for key derivation at a user equipment, UE;
- **Fig. 9**: illustrates an example of a method for triggering/paging an A-IoT device according to a first embodiment;
- **Fig. 10a**: illustrates the steps of a method performed by an IoT device according to the first embodiment;
- **Fig. 10b**: illustrates the steps of a method performed by a communication node according to the first embodiment;
- **Fig. 11**: illustrates an implementation of a method for authentication of an A-IoT device and a communication node according to a first example of a second embodiment;
- **Fig. 12**: illustrates an overview of asymmetric key derivation;
- **Fig. 13**: illustrates an implementation of a method for authentication of an A-Iot and a communication node according to a second example of the second embodiment;
- **Fig. 14**: illustrates an example of computation of authentication tokens according to the second example of the second embodiment;
- **Fig. 15**: illustrates an implementation of a method for authentication of an A-IoT device and a communication node according to a third example of the second embodiment;
- **Fig. 16**: illustrates an example of determination of authentication tokens according to the third example of the second embodiment;
- **Fig. 17**: illustrates an implementation of a method for authentication of an A-IoT device and a communication node according to a fourth example of the second embodiment;
- **Fig. 18a**: illustrates the steps of a method performed by an IoT device according to the second embodiment;
- **Fig. 18b**: illustrates the steps of a method performed by a communication node according to the second embodiment;
- **Fig. 19**: illustrates an implementation of a method for authentication of an A-IoT device and a communication node according to a first example of a third embodiment;
- **Fig. 20**: illustrates an implementation of a method for authentication of an A-IoT device and a communication node according to a second example of the third embodiment;
- **Fig. 21a**: illustrates the steps of a method performed by an IoT device according to the third embodiment;
- **Fig. 21b**: illustrates the steps of a method performed by a communication node according to the third embodiment;
- **Fig. 22**: illustrates a general, simplified and exemplary block diagram of an IoT device and a communication node;
- **Fig. 23**: illustrates functional structure of the circuitries pertaining to the IoT device and the communication node; and
- **Fig. 24**: shows exemplary functional split options in 5G O-RAN.

### DETAILED DESCRIPTION

### 5G NR system architecture and protocol stacks

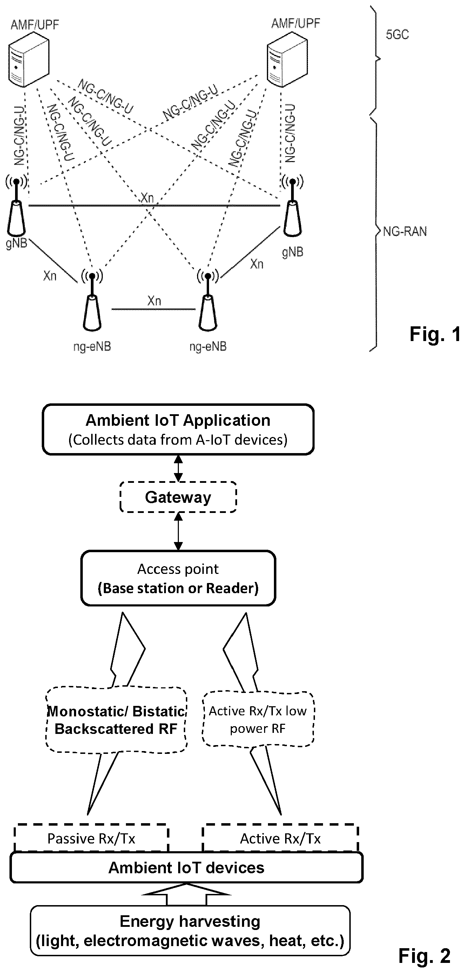

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in **Fig. 1** (see e.g. 3GPP TS 38.300 v15.6.0, section 4)

### Ambient IoT Device

An ambient loT device (A-loT device) is an energy harvesting device or terminal having a small battery or having no battery. An A-loT device may be an ultra-low complexity device with ultra-low power consumption for very-low end loT applications. Examples for A-loT devices include without any limitation wearables, smart home devices, automotive devices, sensors, smart keys, healthcare devices, etc.

**Fig. 2** exemplarily illustrates the interplay between an A-loT device, a reader or base station, and an A-loT application.

An loT system with an A-loT device, access point, and application functions as follows. The A-loT device may be a sensor that autonomously monitors parameters like temperature or humidity. It may harvest energy from light, electromagnetic waves, or heat, ensuring low power operation. The device could be passive, using backscattered communication to reflect RF signals, or active, e.g. transmitting data via low-power RF protocols.

The access point, which may be a reader or a base station, collects data from these loT devices, often using RF communication or short-range wireless protocols. It processes the incoming signals, decodes them, and forwards the data to a gateway. The gateway serves as a bridge, transmitting the data to an application through a network connection, like Wi-Fi or cellular.

The application receives, stores, and may analyze the data, and may provide real-time insights, alerts, and visualization to users, for example. It may also trigger actions based on the data, such as activating devices or adjusting system parameters. Examples of the application are automated warehousing, electronic shelf labelling, or the like. Further details may be found, for instance, in 3GPP TR 22.840 v19.0.0 "Study on Ambient power-enabled Internet of Things".

A-loT devices lack RRC states and ARQ and HARQ transmission protocols that ensure reliable data delivery, A-loT devices have limited power available resulting in reduced time periods of communication capability and A-loT devices are configured with new specifically designed new operation states. Thus, integration of A-loT devices into 5G and future technologies poses a demanding problem that is addressed in the present disclosure.

That is, the power consumption and the complexity of A-loT devices are much lower than existing 3GPP loT technologies (e.g. NB-loT, eMTV, RedCap) and shall address use cases and scenarios than cannot otherwise be fulfilled by existing 3GPP loT devices.

### Topologies

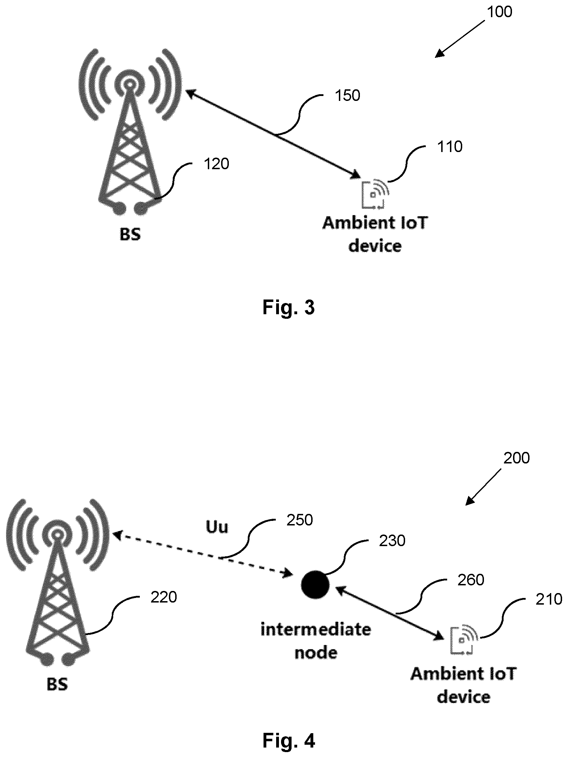

Particularly, two different topologies are exemplarily considered in this disclosure. In a first topology 100 as illustrated in **Fig. 3****,** an A-loT device 110 directly and bidirectionally communicates with a base station 120 over a wireless channel 150. In general, the A-loT 110 may be any kind of loT device. The communication may include transmitting and/or receiving signals that may carry data. The data may include user data (e.g. measurements performed by the loT) and/or signaling information or signals such as control signals, reference signals or the like. The direct communication with the base station 120 may still include communication via one or more distributed units, DU, of the base stations 120. A base station 120 may operate one or more cells.

In a second topology as illustrated in **Fig. 4****,** an A-loT device 210 bidirectionally communicates with an intermediate node 230 that is located between the A-loT device 210 and the base station 220. The intermediate node 230 could be a UE, IAB, relay, or NCR. The intermediate node 230 is connected to both the base station 220 and the A-loT device 210 and transfers the user data and/ signaling between the A-loT device 210 and the base station 220. Traffics are A-loT device terminated or A-loT device originated. The base station 220 may communicate with the intermediate node 230 via a first interface 250. In **Fig. 3****,** this is exemplified as the Uu interface (UE - gNB interface in NR). The intermediate node 230 may communicate with the A-loT device 210 via a second interface 260. The present disclosure is not limited to any specific interface definition. In general, interfaces 250 and 260 may be both wireless interfaces.

Further details may be found for instance, in 3GPP RP-240826 "Revised SID: Study on solutions for Ambient loT (Internet of Things) in NR".

In the present disclosure, a reader may refer to a base station 120 or an intermediate node 230. A reader or a base station may be referred to as a communication node. Further, a communication node may include a reader/a base station and a network node. In the present disclosure, a transmission from an loT device to a reader or a base station is referred to as D2R and a transmission from a base station or a reader to an loT device is referred to as R2D.

### Services provided by an A-loT device

A-loT devices are envisaged to provide two types of services, namely "inventory" and "command". For an "inventory" service, the A-loT device provides a device identifier when triggered by a reader or a base station. For a "command" service, the reader or base station may instruct the A-loT device to perform certain operations like providing certain information. That is, in contrast to "inventory" service, wherein the A-loT device merely responds with its ID to a trigger signal, an A-loT device performing "command" service may be actively controlled by the reader or base station.

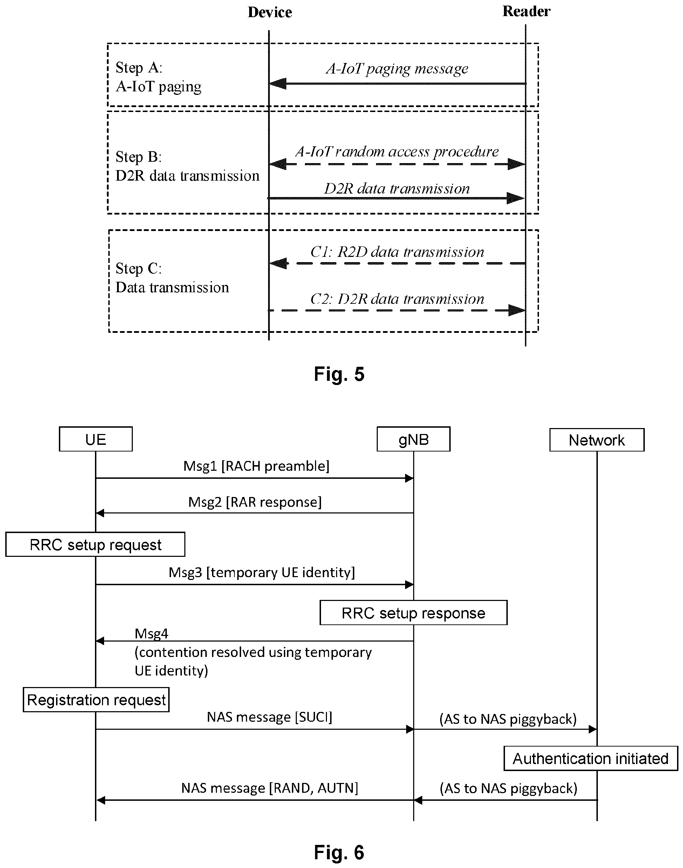

A baseline procedure related to the communication between a reader and an loT device may consist of two or three steps, as illustrated in **Fig. 5****,** which illustrates transmissions between a reader and an A-loT device according to services "inventory" and "command". In the figure, the steps are indicated as steps A, B and C. During step A, an initial trigger message (A-loT paging message) is transmitted from the reader to the device. This message may be referred to as Msg0 and may consist of a device identifier (device ID) to trigger one A-loT device or a group identifier (group ID) to trigger multiple A-loT devices belonging to a group associated with the group ID. In step B, a procedure similar to a random access procedure may be performed, if required. This random access procedure may be performed in a 2-step approach or a 3-step approach, as detailed further below. In step C, communication between the A-loT device and the reader may be performed, wherein, for example, the reader requests a transmission of certain data. It is to be noted that an "inventory" service may utilize steps A and B only, whereas a "command" service may utilize steps A to C.

A random access procedure may be performed in a 2-step approach or a 3-step approach, as mentioned above.

In an exemplary 3-step approach, a random ID may be generated and transmitted by the device in Msg1. In Msg2, the reader may echo the received ID. The loT device may consider the contention resolution successful if Msg2 includes the same random ID as transmitted in Msg1. In Msg3, the loT device may send a device ID and/or other upper layer data to the reader.

In an exemplary 2-step approach, the loT device may transmit its ID and/or other upper layer data to the reader in Msg1. The reader may then echo some information from Msg1 in Msg2 to the loT device.

In the random access procedure as outlined above, the device ID may be transmitted in Msg3 of the 3-step approach or Msg1 of the 2-step approach, which may be critical for security of the loT device, since the identity of the loT device may become vulnerable to threats for A-loT services or vulnerable to emerging fake products. In this respect, it is to be noted that security requirements may depend on the application model of A-loT services. Further, due to limited capabilities of the A-loT devices, security requirements, security design and security solutions may be impacted.

Therefore, there is a demand for efficient and effective protection of device IDs, in particular in the framework of a group of devices, wherein each device should be uniquely identified and authenticated before an inventory or command procedure may be performed.

### Embodiments

The present disclosure addresses the integration of A-loT devices into communication networks, particularly, 5G and future technologies.

It is noted that the present disclosure is not limited to A-loT devices. It may be also applicable to any other kind of loT devices or to other devices with possibly substantial power limitations. For example, the terms loT device and A-loT device are used interchangeably in this disclosure.

In the following, a node communicating with an A-loT device and, for example, receiving data from the A-loT device, may be also referred to as a reader.

In the following, A-loT devices, base stations, intermediate nodes and procedures of communication will, particularly, be described for the new radio access technology envisioned for the 5G mobile communication systems, but may also be used in LTE mobile communication systems, 6G mobile communication systems and other wireless or wired communication system including wireless local area networks or the like. Different implementations and variants will be exemplified. The following disclosure was facilitated by the discussions and findings as described above and may for example be based at least on part thereof.

In general, it should be noted that many assumptions have been made herein so as to be able to explain the principles underlying the present disclosure in a clear and understandable manner. These assumptions are however to be understood as merely examples made herein for illustration purposes that should not limit the scope of the disclosure.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next 3GPP 5G communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure.

For instance, a mobile station or mobile node or user terminal or user equipment (UE) or loT device or A-loT device is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" or "communication node" or "reader" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB.

Communication between the A-loT device and the base station or an intermediate node is typically standardized and may be defined by different layers, such as PHY, MAC, RRC etc.

The present disclosure relates to an A-loT device, a communication node like a base station or an intermediate node connected to a base station, and methods of communication between the A-loT device and the communication node, in particular addressing identification and authentication of loT devices in a situation where a group of loT devices is triggered/paged.

For this purpose, for example, a 5G procedure for initiating authentication may be implemented. **Fig. 6** illustrates an overview of a 5G procedure for authentication. Such a 5G legacy procedure for authentication may be initiated when a user equipment (UE) specific identity like SUCI (Subscription Concealed Identifier) is sent during a registration step, after completing the initial step of random access. First, the UE performs random access to connect with the access stratum layer at the base station (gNB). In this framework, a temporary ID (called temporary C-RNTI or TC-RNTI) may be used in Msg3 and the response received in Msg4, in order to establish a connection with RRC and resolve contention in a CBRA (Contention-based Random Access)-based environment. This temporary ID is not used for authentication at the network. Instead, a new identity is sent in a second step. In the second step, the UE transmits a concealed ID to initiate the authentication procedure. The concealed ID may be the SUCI, which is protected by encryption. In this framework, an authentication request generated at the core network is specific to the UE that initiated authentication. Further, an authentication challenge is transmitted to the UE over a NAS layer, for instance.

This approach as illustrated in Fig. 6 could be re-used for authentication purposes of an A-loT device. That is, A-loT devices could transmit a device ID in a concealed manner (similar to SUCI) for authentication by the network. Such an authentication response could be sent during step C as illustrated in Fig. 5.

However, step C may not be available for A-IoT devices providing "inventory" service. That is, when applying the same principle of authentication as illustrated in Fig. 6 for A-loT devices, additional communication steps would have to be implemented also for A-loT devices for "inventory" service. Considering the limited complexity of loT devices, such an approach would not be practical.

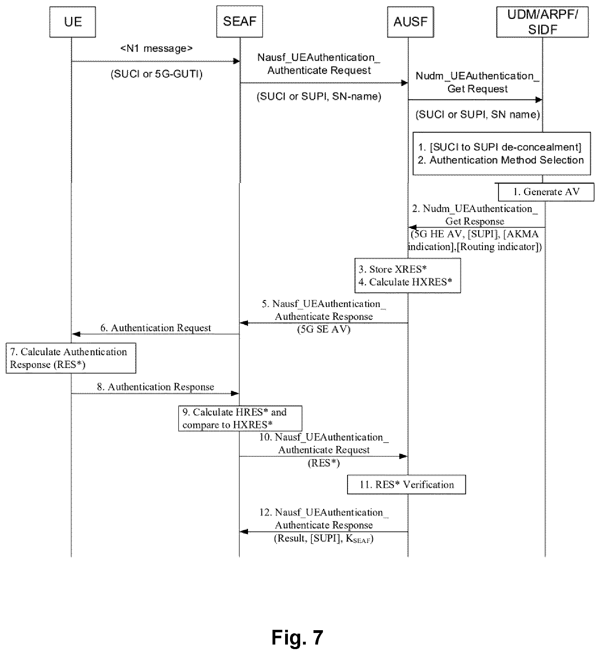

**Fig. 7** illustrates an overview of a 5G Authentication and Key Agreement (AKA) procedure for authentication. The 5G AKA procedure is a security mechanism that ensures mutual authentication between the user equipment (UE) and the network, as well as the establishment of a secure communication session.

The procedure begins when the UE requests to connect to the 5G network. The connection request is forwarded by the gNB to the serving network, which is responsible for handling the initial authentication. The serving network communicates with the AUSF (Authentication Server Function). Upon receiving the authentication request, the AUSF generates a challenge, which includes a RAND (random number) and an AUTN (authentication token). The challenge is sent to the UE via the serving network. The UE has a secret key, which is used to compute a response based on the RAND and AUTN. The response is calculated using the 5G AKA protocol and a secret cryptographic key. The UE sends its computed response (RES) back to the serving network. The serving network then verifies the response by comparing it with the expected result, which is calculated using the same RAND and AUTN values. If the response is correct, the UE is authenticated successfully. If the authentication fails (for example, due to incorrect credentials or an invalid response), the UE is denied access to the network, and the session does not proceed.

Further details can be found, for instance, in 3GPP TS 33.501 version 18.6.0 "Security architecture and procedures for 5G System".

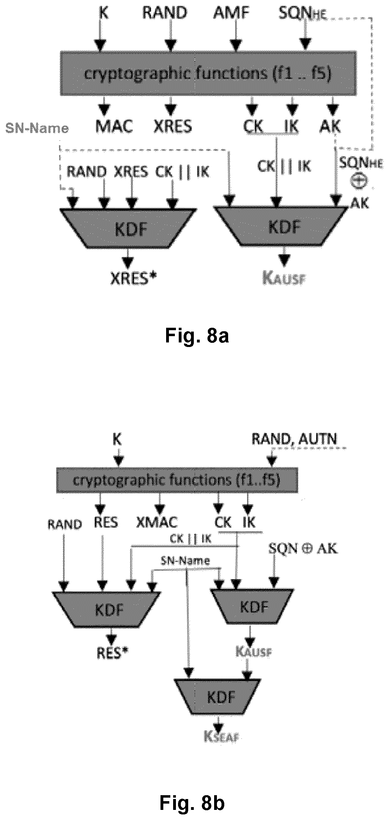

In this framework, the key derivation and authentication hash functions at the core network and the UE are kept synchronized. **Fig. 8a** illustrates an exemplary approach for key derivation at the core network and **Fig. 8b** illustrates an exemplary approach for key derivation at a user equipment, UE. Cryptographic functions for computing cryptographic keys and hash functions may be selected based on the UE capability indicated in a registration request. Further the UE may perform the same operations as computed at the core network to derive authentication tokens for verification/authentication of the network. With this approach, encryption and/or decryption keys may be derived independently and synchronously by the UE and the network and used in the communication therebetween.

This approach as illustrated in Figs. 7, 8A and 8B could similarly be applied to the authentication procedure of an A-loT device, wherein the operations described for the UE are performed by the A-loT device and the operations performed for some or all of the other components may be performed by the reader.

However, the complexity of the approach and, in particular key derivation, ID transmission, may exceed the capabilities of an A-loT device. It is therefore desirable to provide methods for authentication with a reduced complexity, allowing respective operations to be efficiently and effectively performed by an A-loT device.

### Embodiment 1

In this embodiment, a trigger message or a paging message is received by an loT device, indicating whether or not authentication is required. The loT device may respond if authentication is required and the loT device is capable of an authorization procedure or if it is indicated that authorization is not required. A communication node (e.g. base station or reader) may determine whether authorization is required and indicate whether authorization is required in the trigger message transmitted to the loT device.

It is provided an (ambient) Internet of Things, loT device, comprising a transceiver which, in operation, receives a trigger message indicating whether or not authentication is required. The loT device further comprises circuity which, in operation, determines whether or not a communication node is authenticated if it is indicated that authentication is required and the loT device supports authentication.

It is further provided a communication node, comprising a transceiver which, in operation, transmits a trigger message to an Internet of Things, loT device, wherein the trigger message indicates whether or not authentication is required. The communication node further comprises circuitry which, in operation, determines whether or not the loT device is authenticated if it is indicated that authentication is required and the loT device supports authentication.

That is, according to embodiment 1, a communication node may determine whether or not authentication is required in an upcoming communication with an loT device. Said determination may depend on the use case. IoT devices may be categorized into devices that support authentication and devices that do not support authentication. For example, loT devices may be categorized into devices whose identity should be protected and devices whose identity is not required to be protected. This categorization may be predetermined, pre-obtained, or determined depending on the specific case.

If the identity of the loT device is not required, such an loT device could transmit its device identity during a random access procedure, e.g. in Msg3 in a 3-step approach or Msg1 in a 2-step approach. On the other hand, if the identity is required to be protected, the loT device and/or the communication node may perform authentication of the communication node and/or the loT device, for example as described in embodiments 2 and/or 3 or another authentication procedure.

When the communication node is to transmit the trigger message, which may be a paging message, the circuitry of the communication node may determine whether authentication is to be performed based on authentication requirements and indicate to the loT device whether authentication is required. For example, the trigger message may indicate a group identifier (group ID) to trigger responses from loT devices associated with the respective group.

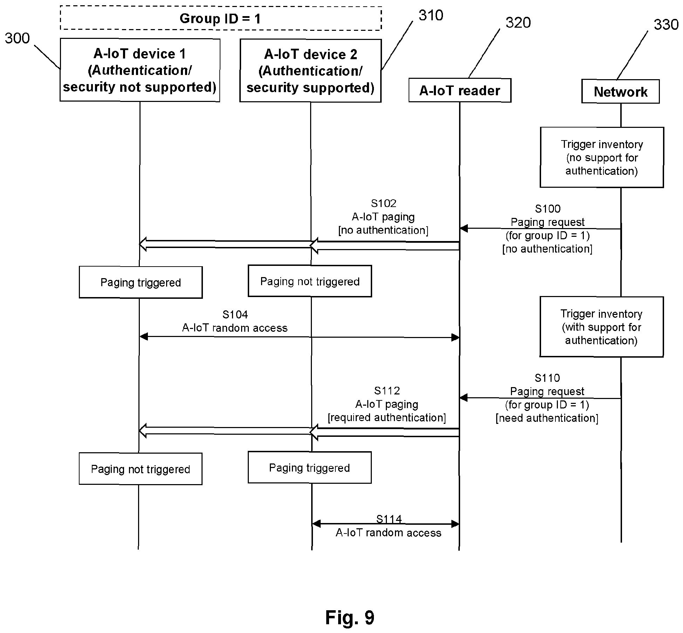

This approach is illustrated in Fig. 9. **Fig. 9** illustrates an example of a method for triggering/paging an A-loT device according to the first embodiment. In the exemplary communication system, there is a first A-loT device (A-loT device 1) 300, a second A-loT device (A-loT device 2) 310, an A-loT reader 320, and a network node 330. The A-loT devices 310 and 320 are both associated with group ID 1. Further, whereas the first A-loT device 300 does not support authentication, the second A-loT device 310 supports authentication. The A-loT reader 320 may be an example of a communication node. The network node 330 may be an example of a communication node. The A-loT reader 320 and the network node 330 may form a communication node together.

The network node 330 determines that loT devices 300, 310, i.e. loT devices of group ID 1, are to be triggered without authentication and transmits, in step S100, a paging request for group ID 1 to the A-loT reader 320. Upon reception of the paging message, the A-loT reader 320 performs A-loT paging in step S102, wherein a trigger message (paging message) is transmitted to A-loT devices 300 and 310. The trigger message indicates that authentication is not required. Therefore, paging is not triggered in the second A-loT device 310, which supports authentication. Conversely, paging is triggered in the first A-loT device 300, since the first A-loT device does not support authentication. Accordingly, a random access procedure is performed by the first A-loT device 300 and the A-loT reader 320 in step S104.

The network node 330 may determine to trigger A-loT devices with support for authentication. Therefore, the network node 330 may transmit a paging request in step S110 for group ID 1, indicating that authentication is required. Accordingly, the A-loT reader 320 transmits a trigger message indicating that authentication is required to the first A-loT device 300 and the second A-loT device 310, wherein the trigger message indicates that authentication is required. Accordingly, paging is not triggered in the first A-loT device 300, which does not support authentication. Conversely, paging is triggered in the second A-loT device 310, since the second A-loT device 310 does support authentication. Accordingly, a random access procedure is performed by the second A-loT device 310 and the A-loT reader 320 in step S114.

That is, as exemplarily illustrated in Fig. 9, the communication node may determine whether or not authentication is required in upcoming communication with loT devices of a specific group. Accordingly, it is indicated to the loT devices whether or not authentication is required. Subsequently, a random access procedure is performed only by loT devices not supporting authentication if the trigger message indicates that authentication is not required, and only by loT devices supporting authentication if the trigger message indicates that authentication is required.

In other words, the circuitry of an loT device, in operation, performs a random access procedure if it is indicated that authentication is required, the loT device supports authentication, and it is determined that the communication node is authenticated, or if it is indicated that authentication is not required.

In this respect, it is noted that the ioT device may perform authentication of the communication node, for example as described in embodiments 2 and 3.

It is further to be noted that IoT devices supporting authentication may perform a random access procedure with an IoT reader even if it is indicated in the trigger message that authentication is not required. In other words, if authentication is not required, IoT devices supporting authentication and IoT devices not supporting authentication may perform a random access procedure. On the other hand, if authentication is required, only loT devices capable of performing authentication may perform a random access procedure.

It is to be noted that an A-loT device that supports authentication may indicate this capability in a D2R transmission. Therefore, when authentication is required, the network may differentiate between responses of devices capable of authentication and devices not capable of authentication.

Alternatively to the exemplary procedure illustrated in Fig. 9, the trigger message may indicate a group identifier (group ID) to trigger responses from loT devices associated with the respective group, wherein a plurality of loT devices are grouped into a first group of loT devices supporting authentication and a second group of loT devices not supporting authentication. When the communication node transmits the trigger message, it may indicate the necessity of authentication using the respective group ID. In other words, the communication node may indicate that authentication is required by transmitting the group ID of the group including loT devices supporting authentication in the trigger message. Conversely, the communication node may indicate that authentication is not required by transmitting the group ID of the group including loT devices not supporting authentication in the trigger message.

With this approach, a further indication of whether or not authentication is required is not needed, since said indication is implemented by the group ID included in the trigger message and all of the loT devices supporting authentication are included in a group different from a group including all loT devices not supporting authentication.

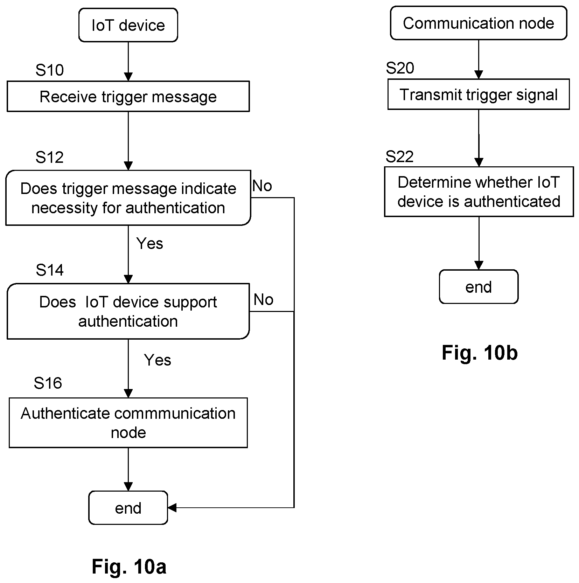

**Fig. 10a** illustrates the steps of a method performed by an loT device according to the first embodiment. In step S10, the loT device receives a trigger message from a communication node. The trigger message indicates whether or not authentication is required. In step S12, it is determined whether the trigger message indicates that authentication is required. If so (Yes in step S12), it is determined in step S14 whether the loT device supports authentication. If so (Yes in step S14), the loT device performs an authentication of the communication in step S16 in the framework of a random access procedure. If the trigger message indicates that authentication is not required (No in step S12) or of the loT device does not support authentication (No in step S14), the loT device does not perform authentication and does not perform a random access procedure.

**Fig. 10b** illustrates the steps of a method performed by a communication node according to the first embodiment. In step S20, the communication node transmits a trigger signal to an loT device. The trigger signal indicates whether or not authentication is required. In step S22, the communication node determines whether an loT device capable of authentication is authenticated. For example, the communication node may receive messages in the framework of a random access procedure from an loT device supporting authentication. Based on the messages received, the communication node may determine whether the loT device is authenticated.

Details of authentication between an loT device and a communication node are described in embodiments 2 and 3. In this respect, it is to be noted that embodiment 1 may be combined with embodiment 2 and/or 3, in the sense that it may be indicated to an loT device whether authentication is required and, if authentication is required and the loT device supports authentication, authentication (of the communication node by the loT device and of the loT device by the communication node) is performed according to any one of the methods described below for embodiments 2 and/or 3.

### Embodiment 2

Embodiment 2 focuses on authentication in a situation where a plurality of loT devices included in a group of loT devices is triggered and authentication is to be performed. The group authentication may be achieved by performing a combining authentication during paging and random access.

According to embodiment 2, group authentication data is generated for all loT devices in the group for authentication of the network/communication node by the loT devices within the group. That is, the group authentication data is common for all loT devices included in the group. Conversely, each loT device determines device authentication data, which may be different for each of the loT devices included in the group, for authentication of the loT devices by the network/communication node. The group identification data is transmitted on R2D, whereas the device authentication data is transmitted on D2R.

That is, according to the second embodiment, provided is an Internet of Things, loT device, comprising a transceiver which, in operation, receives a first message, the first message indicating group authentication data common to a group including the loT device. The loT device further comprises circuitry which, in operation, performs authentication by determined whether or not the communication node is authenticated using the group authentication data. Further, the circuitry determines device authentication data specific to the loT device, if it is determined that the communication node is authenticated. The transceiver, in operation, transmits a second message indicating the device authentication data.

Further provided is a communication node, comprising a transceiver and circuitry. The circuitry, in operation, obtains group authentication data common to a group including an loT device. The transceiver, in operation, transmits a first message to each device included in the group, the first message indicating the group identification data. The transceiver further receives a second message indicating device authentication data from the loT device. The circuitry, in operation, determines whether or not the loT device is authenticated using the device authentication data. The device authentication data may be specific to the loT device.

The first message may be a trigger message (cf. as in embodiment 1), Msg1 of a random access procedure (e.g. 3-step random access procedure as described above), a paging message, or the like.

The group authentication data may be data to be used for authentication of the communication node by each of the devices included in the group. The group authentication data may include an authentication challenge, an authentication token, or any other data suitable for authentication of the communication node. Examples of group authentication data is provided below in the examples of embodiment 2.

The device authentication data may be data to be used for authentication of the respective loT device by the network/the communication node. The device authentication data may be specific to the loT device transmitting said data. The device authentication data may include an authentication challenge, an authentication token, or any other data suitable for authentication of the respective loT device. Examples of group authentication data is provided below in the examples of embodiment 2.

The authentication may be based on multiple secret keys (for R2D and D2R), as described in examples 1 and 2 of embodiment 2, on multiple authentication tokens (for R2D and D2R), as described in example 3 of embodiment 3, or a combination thereof, as described in example 4 of embodiment 2.

### Example 1 of embodiment 2

According to example 1 of embodiment 2, the mutual authentication between an loT device and the network/communication node is based on multiple secret keys and encrypted data. For this purpose, the loT device may store a group key (e.g. K_{group#}) for verification/authentication of a communication node from which a first message (e.g. a paging message) is received. Further, the loT device may store a device key (e.g. K_{device}#) for encrypting data to be transmitted to the communication node for verification/authentication of the loT device. Accordingly, the communication node may store the group key and device keys for each device included in a group. Said keys may be used for authentication purposes, as detailed further below.

That is, according to example 1 of embodiment 2, provided is an loT device as described above, further comprising memory which, in operation, stores a group key associated with the group. The group authentication data (received in the first message) includes encrypted data. Further, the first message indicates the first data. The circuitry, in operation decrypts the encrypted data using the group key to obtain second data. Further, the circuitry determines that the communication is not authenticated if the first data differs from the second data.

Conversely, the communication node may be determined as being authenticated if the first data matches the second data. However, there may be further conditions to be met for the communication node to be authenticated.

Further, for example, the memory may store a device key associated with the loT device. The circuitry, in operation, may encrypt the first data using the device key, if it is determined that the communication node is authenticated. The device authentication data, which is transmitted in the second message to the communication node, includes the encrypted first data.

Accordingly, provided is a communication node as described above, further comprising memory which, in operation, stores a group key associated with the group and at least one device key associated with the loT device included in the group. The circuitry, in operation, encrypts first data and transmits the first message to devices included in the group (including the loT device). The group authentication data includes the encrypted data. Further, the first message indicates the first data.

Further, for example, the communication node may receive the second message including the first data encrypted by the loT device using the device key associated with the loT device. The circuitry, in operation, may decrypt the encrypted data using the device key associated with the loT device and compare the decrypted data with the first data. If the decrypted data and the first data do not match, the circuitry may determine that the loT device is not authenticated.

Conversely, the loT device may be determined as being authenticated if the decrypted data matches the first data. However, there may be further conditions to be met for the loT device to be authenticated.

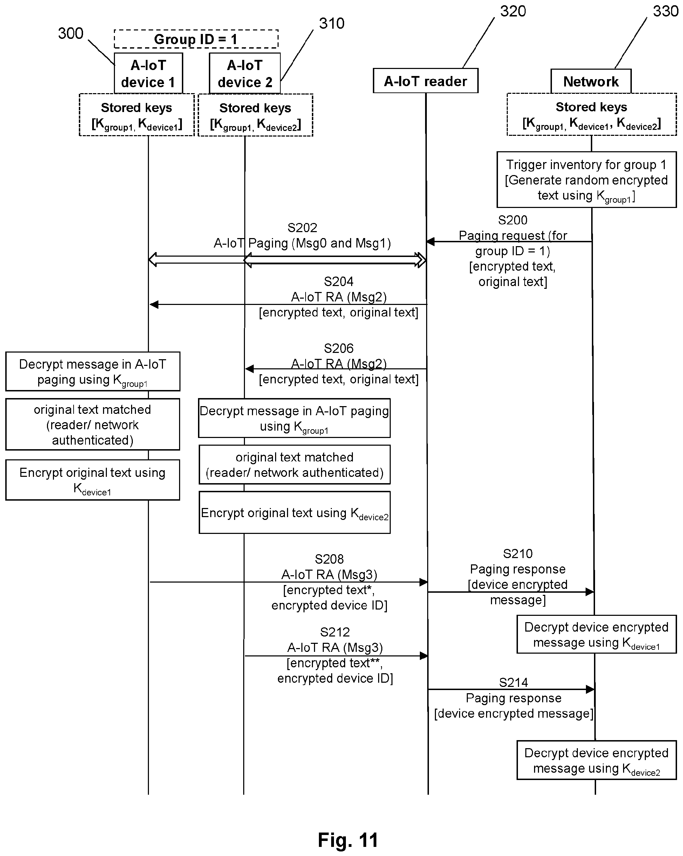

**Fig. 11** illustrates an implementation of a method for authentication of an A-loT device and a communication node according to the first example of a second embodiment.

A first A-loT device 300 stores a group key K_{group1} and a device key K_{device1}. The group key is common to all devices of a group having a group ID of 1; the device key K_{device1} is specific to the first A-loT device 300. A second A-loT device 310 stores the group key K_{group1} and a device key K_{device2}. The device key K_{device2} is specific to the second A-loT device 310. The communication system further comprises an A-loT reader 320 and a network node 330. The A-loT reader 320 may be an example of a communication node. The network node 330 may be an example of the communication node. The A-loT reader 320 and the network node 330 may form together an example of a communication node. The network node 330 stores the group key K_{group1}, the device key K_{device1} and the device key K_{device2}. Said keys may be pre-obtained by the A-loT devices 300, 310 and the network node 330, for instance, via secure communication. Alternatively, the keys may be predetermined and, for instance, stored in the A-loT devices 300, 310 upon production.

The network node 330 intends to trigger the A-loT devices 300, 310 of group ID = 1, for instance, in an "inventory" or "command" service framework. For this purpose, the network node encrypts a random text using K_{group1} and transmits a paging request for group ID = 1, including the encrypted text and the original text to the A-loT reader 320 in step S200. The encrypted text and the original text form an example of group authentication data. The A-loT reader 320 performs paging of the first and second A-loT devices 300, 310 in step S202. For instance, Msg0 is transmitted to each of said A-loT devices 300, 310, and respective response Msg1 is received from the devices. In step S204, the A-loT reader 320 transmits Msg2 (an example of the first message) to the A-loT devices 300, 310. The transmitted Msg2 includes the encrypted text and the original text.

Each of the A-loT devices 300, 310 decrypts the encrypted text received in Msg2 using the stores group key K_{group1}. Further, each of the A-loT devices compares the decrypted text and the original text as included in Msg1 and, if said texts match each other, it is determined that the A-loT reader 320/the network node 330 is authenticated. Further, the first A-loT device 300 encrypts the test using the device key K_{device1} and the second A-loT device 310 encrypts the text using device key K_{device2}. Further, the first A-loT device 300 may encrypt the device ID associated with the first A-loT device 300 using the device key K_{device1}. The second A-loT device 310 may encrypt its device ID (which differs from the device ID of the first A-loT device) using the device key K_{device2}. Subsequently, the first A-loT device 300 transmits in step S208 Msg3 (an example of a second message) including the encrypted text (encrypted using K_{device1}) and the encrypted device ID of the first A-loT device 300 (encrypted using K_{device1}) to the A-loT reader 320, which forwards the encrypted data received from the first A-loT device 300 to the network node 330 is step S210 in a paging response. Similarly, the second A-loT device 310 transmits in step S212 Msg3 (an example of a second message) including the encrypted text (encrypted using K_{device2}) and the encrypted device ID of the second A-loT device 310 (encrypted using K_{device2}) to the A-loT reader 320, which forwards the encrypted data received from the second A-loT device 310 to the network node 330 is step S214 in a paging response. The network node 330 may subsequently verify/authenticate the first and the second A-loT devices 300, 310 by decrypting the encrypted text using K_{device1} and K_{device2}, respectively, and compare the decrypted text with the original text. If the texts do not match with each other, the respective A-loT device is determined as being not authenticated. On the other hand, if the texts match each other, respective A-loT device may be determined as being authenticated. However, there may be other conditions to be met in order for the A-loT device to be determined authenticated.

It is to be noted that the encrypted device IDs are not necessarily transmitted in Msg3. That is, Msg3 may carry the encrypted text, but not the encrypted device ID. The device ID may be transmitted in a different message.

In the example illustrated in Fig. 11 described above, the authentication of the A-loT devices 300, 310 is mainly performed by the network node 330. That is, the network node 330 stores the group key and the device keys, encrypts the text transmitted in S200, and decrypts the encrypted text received in S210 and S214 for authentication. Therefore, in this example, the network node 330 is an example of a communication node.

However, the present disclosure is not limited to this approach. In another implementation, said processes may be performed by the A-loT reader 320. That is, encryption of the text, decryption of the received text, storage of the group key and the device keys and authentication of the A-loT devices 300, 310 may be performed by the A-loT reader 320. For this purpose, for instance, the network node 330 may forward the keys to the A-loT reader 320 for storage. Further, the A.IoT reader 320 may inform the network node 330 whether or not the A-loT devices 300, 310 were authenticated successfully. In this example, theA-loT device represents an example of a communication node.

Further, the processes for authentication mentioned above may be shared between the A-loT reader 320 and the network node 330. For example, encryption may be performed by the network node 330 and decryption of the text received from the A-toT devices 300, 310 may be performed by the A-loT reader 320. For this purpose, the network node 330 and the A-loT reader 320 may store the required keys (group key and/or device keys). In this example, the communication node is formed by the A-loT reader 320 and the network node 330. With this approach the load for authentication may be shared between multiple devices. However, the disclosure is not limited to this distribution of the processes, and any other distribution may be applied.

As an alternative to the above, a temporary ID, which may be shorter in data size as compared to the full device ID) may be utilized in the authentication process, as described, for instance, in embodiment 3.

In the above-described implementation of example 1 of embodiment 2, a random text is used for encryption on D2R or R2D. The size of the random text may be arbitrary (e.g. 32 bits). In this case, there are a limited number of potential random texts (e.g. 2³²) to select a random text for transmission. However, repeating one of the texts in a later process may lead to vulnerability due to replay attacks, i.e. an attack where an eavesdropped combination of an encrypted text and the original text is used in an attack message, mimicking a network node, an A-loT reader, and/or an A-loT device. Therefore, such attacks may introduce fake products into the system.

Although the number of combinations in a text of certain size (e.g. 32 bits) may be increased by increasing the size of the text (e.g. to 64 bits), this might not be feasible in particular in view of a usually limited computing and/or storage capability of an A-loT device.

In view thereof, multiple keys may be stored for respective authentication in D2R and R2D, wherein some predetermined or pre-obtained shuffling rule is applied in order to determine the key to be used for encryption/decryption.

That is, according to a modification of example 1 of embodiment 2, the loT device may comprise memory which, in operation, stores multiple device keys and/or multiple group keys. The circuitry, in operation, may obtain a device key and/or a group key for decryption and/or encryption applying a predetermined shuffling rule to the device keys and/or group keys.

Accordingly, a communication node may comprise memory which, in operation, stores multiple device keys and/or multiple group keys. The circuitry, in operation, may obtain a device key and/or a group key for decryption and/or encryption applying a predetermined shuffling rule to the device keys and/or group keys.

The group keys and/or the device keys may be stored as an indexed table and the table index is referred using the shuffling rule. The shuffling rule may be determined secretly between the A-loT devices and the network. The index shuffling rule may be synchronously determined, for example, as described in the following. However, the present disclosure is not limited thereto, and different shuffling rules may be applied.

**Table 1a**

| | **A-IoT device 1** | |
|---|---|---|
| **Table (key) index [1 ,2]** | **Stored keys** | |
| | Group ID key | Device ID key |
| | K(1)_{group1} | K(1)_{device1} |
| | K(2)_{group1} | K(2)_{device1} |
| | K(3)_{group1} | K(2)_{device1} |

**Table 1c**

| | **A-IoT device 2** | |
|---|---|---|
| **Table (key) index [1 ,2]** | **Stored keys** | |
| | Group ID key | Device ID key |
| | K(1)_{group1} | K(1)_{device2} |
| | K(2)_{group1} | K(2)_{device2} |
| | K(3)_{group1} | K(2)_{device2} |

**Table 1c**

| | **A-IoT device 1** | | |
|---|---|---|---|
| **Table (key) index [1 ,2]** | **Stored keys** | | |
| | Group ID key | Device ID =1 key | Device ID = 2 key |
| | K(1)_{group1} | K(1)_{device1} | K(1)_{device2} |
| | K(2)_{group1} | K(2)_{device1} | K(2)_{device2} |
| | K(3)_{group1} | K(2)_{device1} | K(2)_{device2} |

Tables 1a, 1b and 1c illustrate the keys stored by the first A-loT device, the second A-loT device, and the communication node. Each of the devices stores three group keys K(1)_{group1} to K(3)_{group1} for the group with group ID = 1. Further, the first A-loT device stores three device keys K(1)_{device1} to K(3)_{device1} specific to the first A-loT device. Further, the second A-loT device stores three device keys K(1)_{device2} to K(3)_{device2} associated with the second A-loT device. The communication stores the device keys of the first and the second A-loT device. The table (key) index indicates which group and device key are to be used for the next authentication process. Specifically, the first value (1) indicates the row of the column indicating the group key, which holds the group key for the authentication process. The second value (2) indicates the row of the column indicating the device keys. That is, in the next authentication process, the A-loT devices and the communication node will use K(1)_{group1}, K(2)_{device1} and K(2)_{device2} respectively. After the authentication process, the table key indices for the next authentication process are determined by each of the A-loT devices and the communication node according to a predetermined or pre-obtained shuffling rule.

For example, synchronizing signals (or counts) may be transmitted by the A-loT reader to align the device radio and keep track of subframes and slots which are used for transmitting or receiving data packets. Such signals can be used to update the current table index references. For example, if a subframe counter transmitted by the A-loT reader includes 10 bits, then each counter rolling over from 1023 to 0 can be used to increment the table index by 1. However, another rule may be used.

In a different example, if GPS/UTS is supported (or transmitted in R2D by the A-loT reader), a certain time (day, month, year) may be used to determine the specific index value to be used for authentication. In this case, the index reference can be either stored in volatile memory and updated as per the current time or it may be dynamically determined.

In a case where the index table/the tables are not synchronized between the A-loT device and the network/the communication node, the A-loT device could be updated using a maintenance software, e.g. wired equipment) to update the latest used key index reference. Such maintenance software may also be used for updating the stored keys themselves.

In the above description, the same keys are used by the communication node (the A-loT reader and/or the network node) and the A-loT devices. Such an approach is called symmetric key encryption. Symmetric key encryption is less complex and, therefore, suitable for devices with limited processing and/or storage capabilities, like A-loT devices.

However, the present disclosure is not limited thereto, and asymmetric key encryption may be utilized. For this purpose, a random text may be encrypted using a publc key for encryption and using a private key at the receiving end. Here, it is also possible that a secret key is generated for each transmission, so storing a list of keys as described above may not be required.

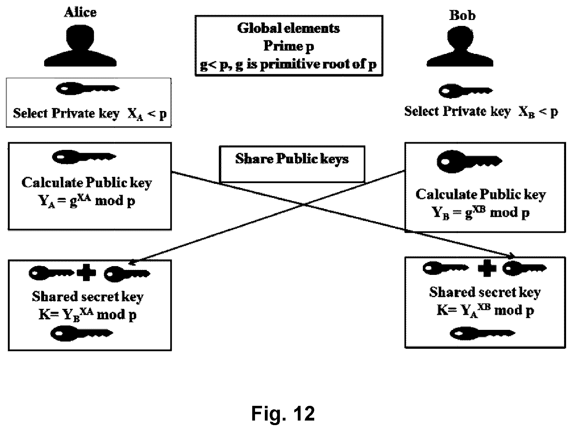

**Fig. 12** illustrates an overview of asymmetric key derivation. In the process of generating a shared secret key, Alice and Bob each create a private-public key pair using asymmetric cryptography.

Alice generates a private key Xₐ and computes her public key Y_{A}=g^{XA} mod p, where g is a base and p is a large prime. Bob does the same, generating his private key X_{B} and public key Y_{B}=g^{XB} mod p. Alice and Bob exchange their public keys over an insecure channel.

Using the public key they received, each computes the shared secret key. Alice uses Bob's public key Y_{B} and her private key Xₐ to compute K=Y_{B}^{XA} mod p. Similarly, Bob uses Alice's public key Yₐ and his private key X_{B} to compute K=Y_{A}^{XB} mod p. Both computations result in the same shared secret K.

This shared secret key can now be used for encryption or secure communication. Even though public keys are exchanged openly, the shared key remains secure because it is computationally difficult to derive the shared secret without the private keys.

In a more specific example, the network generates a public key using K_{group1} and encrypts a random text using the resultant secret key for the group. The public key, the encrypted text and the original text is sent in R2D (like Msg2) for all the devices in the group. Then, the A-loT devices receives the public key and decrypt (or encrypts) the message using the computed secret key (which is expected to be same which was derived at the network side). Next, each A-loT device, after authentication of the network, generates a public key using a device specific key (e.g K_{device1}) and encrypts the original text for transmission in D2R. Here the new public key and the encrypted text is sent to the network as well.

As another possibility, an A-loT device could use both K_{group#} and K_{device#} together to generate a new public key.

With the approach of example 1 of embodiment 2, e.g. by using a random encrypted text in R2D and D2R, replay attacks may be prevented compared to sending only the encrypted device ID in D2R, for example using a fixed SUCI as in a legacy authentication procedure, which is vulnerable to replay attacks.

Further, example 1 of embodiment 2 provides a simple solution, wherein an loT device may only support ciphering for encryption and decryption, which may be less complex than using a legacy authentication algorithm, e.g. with additional cryptographic hash functions.

### Example 2 of embodiment 2

According to example 2 of embodiment 2, the mutual authentication between an loT device and the network/communication node is based on multiple cryptographic tokens. For this purpose, the loT device may store a group key (e.g. K_{group#}) for verification/authentication of a communication node from which a first message (e.g. a paging message) is received. Further, the loT device may store a device key (e.g. K_{device#}) for encrypting data to be transmitted to the communication node for verification/authentication of the loT device. Accordingly, the communication node may store the group key and device keys for each device included in a group. Said keys may be used for authentication purposes, as detailed further below.

That is, according to example 2 of embodiment 2, provided is an loT device as described above, further comprising memory which, in operation, stores a group key associated with the group. The group authentication data includes a first authentication token and the first message further indicates a function input value. Further, the circuitry, in operation obtains a second authentication token using the function input value, the group key, and a cryptographic function and determines that the communication node is not authenticated if the first authentication token differs from the second authentication token.

Conversely, the communication node may be determined as being authenticated if the first authentication token matches the second authentication token. However, there may be further conditions to be met for the communication node to be authenticated.

Further, for example, the memory may stores a device key associated with the loT device. The circuitry, in operation, determines a response token using the device key, the function input value, and a response derivation function. Further, the device authentication data includes the response token.

Accordingly, provided is a communication node as described above, further comprising memory which, in operation, stores a group key associated with the group and at least one device key associated with the loT device included in the group. The circuitry, in operation, determines a first authentication token using the group key, a function input value and a cryptographic function. Further, a transceiver transmits a first message to devices included in the group (including the loT device). The group authentication data includes the first authentication token. Further, the first message indicates the function input value.

Further, for example, the communication node may receive the second message including the device authentication data. The circuitry, in operation, may determine a second response token using the device key of the loT device, the function input value, and a response derivation function and compare the received response token and the derived second response token. If the received response token and the second response token do not match, the circuitry may determine that the loT device is not authenticated.

Conversely, the loT device may be determined as being authenticated if the received response token matches the second response token. However, there may be further conditions to be met for the loT device to be authenticated.

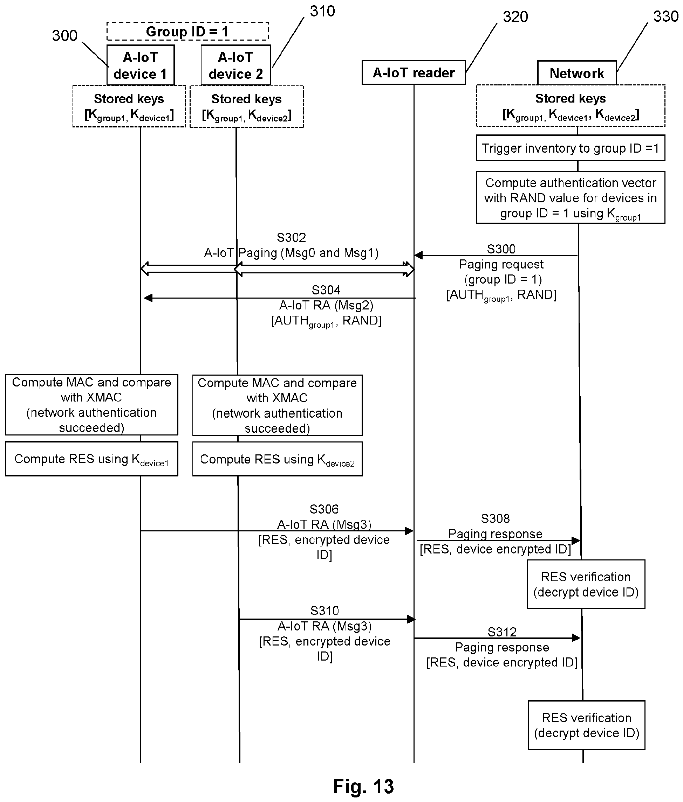

**Fig. 13** illustrates an implementation of a method for authentication of an A-loT device and a communication node according to a second example of the second embodiment.

The system and the method is particularly similar as in system illustrated in Fig. 11. Therefore, repetitive description of similar or equal aspects will be omitted. For instance, the first and second A-loT devices 300, 310 as well as the network node 330 store the same keys as in Fig. 11. Further, the general flow of the method is similar to Fig. 11.

The network node 330 intends to trigger the A-loT devices 300, 310 of group ID = 1, for instance, in an "inventory" or "command" service framework. For this purpose, the network node determines an authentication vector using a RAND variable (an example of a function input value), a cryptographic function, and the group key K_{group1}, in particular resulting in an authentication token AUTH_{group1} (an example of a first authentication token). In step S300, a paging request is transmitted indicating the group ID = 1, including AUTH_{group1} and indicating RAND to the A-loT reader 320. The A-loT reader 320 performs paging of the first and second A-loT devices 300, 310 in step S302. For instance, Msg0 is transmitted to each of said A-loT devices 300, 310, and respective response Msg1 is received from the devices. In step S304, the A-loT reader 320 transmits Msg2 (an example of the first message) to the A-loT devices 300, 310. The transmitted Msg2 includes the first authentication token AUTH_{group1} and the function input value RAND. The authentication token AUTH_{group1} may include a message authentication code (MAC)

Each of the A-loT devices 300, 310 obtains an expected message authentication code (XMAC) using the function input value, the group key K_{group1} and the cryptographic function and compares the XMAC with the received MAC (included in AUTH_{group1}). XMAC is an example of a second authentication token. If the codes MAC and XMAC do not match each other, the communication node (A-loT reader 320 and/or network node 330) is determined as not being authenticated. Further, if the network is authenticated, each A-loT device determines a response token RES using the respective device key K_{device1} and K_{device2}, the function input value RAND, and a response derivation function. Subsequently the response token (included in device authentication data) is transmitted from the A-loT devices 300, 310 to the A-loT reader 320 in S306 and S310, respectively. Further, the A-loT devices 300, 310 may encrypt respective device IDs using the respective device keys and transmit the encrypted device IDs to the A-loT reader in S306 as well. A paging response including the response token and, optionally, the encrypted device ID, is transmitted to the network node 330 in a paging response in S308 and S312, respectively. The network node 330 may subsequently verify/authenticate the first and the second A-loT devices 300, 310 by generating an expected response token in the same manner as the A-loT devices 300, 310 generated the response token and compare the expected response token to the received response token. If the tokens do not match, the respective A-loT device is considered as not being authenticated. On the other hand, if the tokens match each other, the respective A-loT device may be determined as being authenticated. However, there may be other conditions to be met in order for the A-loT device to be determined authenticated.

In the example illustrated in Fig. 13 described above, the authentication of the A-loT devices 300, 310 is mainly performed by the network node 330. That is, the network node 330 stores the group key and the device keys, obtains the authentication token and function input value, and obtains the expected response token for authentication. Therefore, in this example, the network node 330 is an example of a communication node.

However, the present disclosure is not limited to this approach. In another implementation, said processes may be performed by the A-loT reader 320. That is, determination of the authentication token and the function input value, determination of the expected response token, storage of the group key and the device keys, and authentication of the A-loT devices 300, 310 may be performed by the A-loT reader 320. For this purpose, for instance, the network node 330 may forward the keys to the A-loT reader 320 for storage. Further, the A.IoT reader 320 may inform the network node 330 whether or not the A-loT devices 300, 310 were authenticated successfully. In this example, the A-loT device represents an example of a communication node.

Further, the processes for authentication mentioned above may be shared between the A-loT reader 320 and the network node 330. For example, determination of the authentication token and the function input value may be performed by the network node 330 and determination of the expected response token may be performed by the A-loT reader 320. For this purpose, the network node 330 and the A-loT reader 320 may store the required keys (group key and/or device keys). In this example, the communication node is formed by the A-loT reader 320 and the network node 330. With this approach the load for authentication may be shared between multiple devices. However, the disclosure is not limited to this distribution of the processes, and any other distribution may be applied.

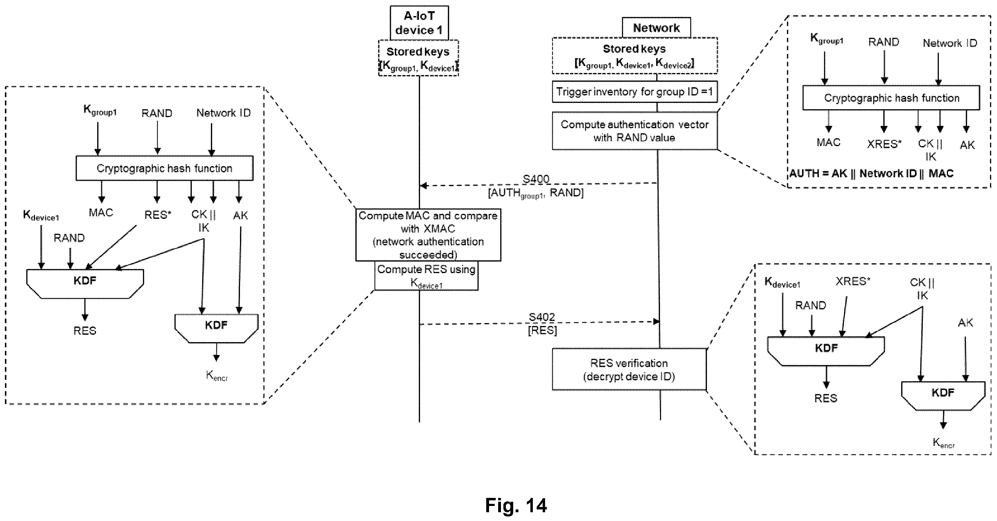

**Fig. 14** illustrates an example of computation of authentication tokens according to the second example of the second embodiment. Fig. 14 illustrates in a simplified manner the method as illustrated in Fig. 13, wherein step S400 corresponds to steps S300, S302, and S304 and step S402 corresponds to steps S306 and S308 or S310 and S312. The network (e.g. A-loT reader 320 and/or network node 330) determines the first authentication token AUTH_{group1} (including MAC), an expected response token XRES* and further tokens (optional) using the group key K_{group1}, the function input value RAND, the network ID (optional) and a cryptographic hash function. The A-loT device (e.g. first A-loT device 300) uses the received function input value RAND, the device key K_{device1} and the network ID (optional) as inputs to the cryptographic hash function to determine MAC, RES* and other tokens. The obtained MAC is compared to the MAY included in the received AUTH_{group1} for authentication by the network. Further, the A-loT device 300 determines a response token RES using a key derivation function with the device key K_{device1}, RAND, and further tokens (optional) as input. Further, the A-loT device 300 transmits the response token RES to the network, which uses K_{device1}, RAND, XRES* and other tokens (optional) as inputs to the key derivation function to obtain the expected response, which is compared with the received response token for authentication of the A-loT device 300.

Further, in a modification, the A-loT device and the communication node may use a key derivation function to determine a key K_{encr} for encrypted communication.

In a further modification, the loT device may comprise memory which, in operation, stores multiple device keys and/or multiple group keys. The circuitry, in operation, may obtain a device key and/or a group key for authentication token derivation by applying a predetermined shuffling rule to the device keys and/or group keys.

Accordingly, a communication node may comprise memory which, in operation, stores multiple device keys and/or multiple group keys. The circuitry, in operation, may obtain a device key and/or a group key for authentication token derivation applying a predetermined shuffling rule to the device keys and/or group keys.

That is, the modification is similar to the modification of example 1 of embodiment 2, as described with reference to tables 1a to 1c. However, here the device keys/group keys are used for derivation of the authentication/response tokens rather than for encryption/decryption of a text.

With the approach of example 2 of embodiment 2, a stronger protection may be achieved compared to using encryption or decryption of random text as in example 1 of embodiment 2, since cryptographic hash functions provide a stronger protection against ciphering attacks. Further, new encryption keys can be derived for each encryption and decryption of data, which may further increase security in comparison to the use of static keys stored in memory.

### Example 3 of embodiment 2

According to example 3 of embodiment 2, group authentication tokens are pre-computed or pre-obtained at the A-loT devices 300, 310 rather than being computed during A-loT paging or random access procedure, as described in example 2 of embodiment 2.

That is, according to example 3 of embodiment 2, the loT device comprises memory which in operation, stores association data associating at least one function input value with a pre-obtained authentication token, wherein the group authentication data includes a first authentication token. The first message further indicates a function input value. The circuitry, in operation, obtains a second authentication token using the function input value and the association data, and determines that the communication node is not authenticated if the first authentication token differs from the second authentication token.

For example, the association data further associates the function input value with a pre-obtained response token and/or a pre-obtained device key

The association data may be an indexed table. The circuitry, in operation, may obtain the second authentication token, a response token and/or a device key by applying a predetermined index shuffling rule to the indexed table.

The communication node may perform the same operations as in example 2 of embodiment 2.

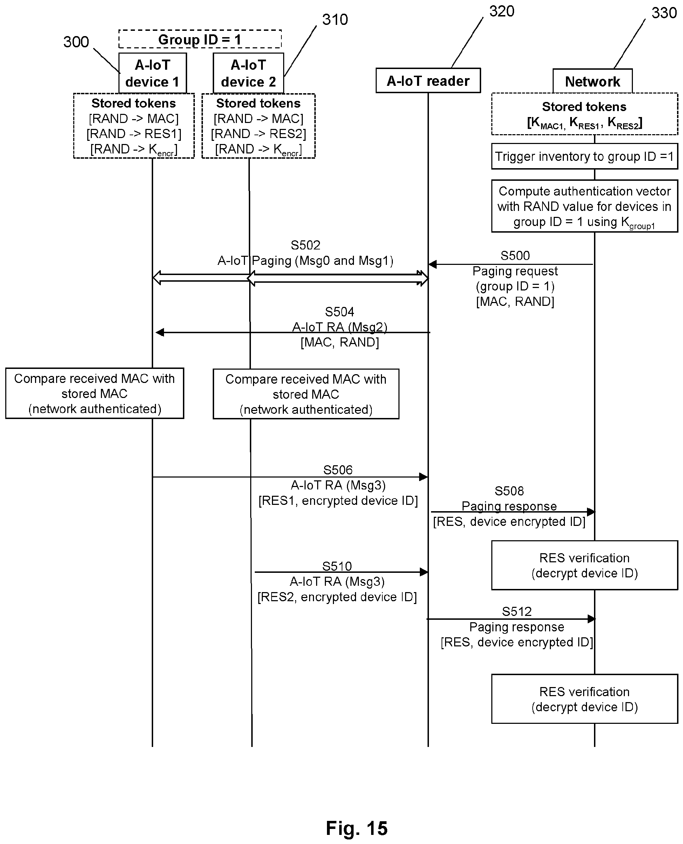

**Fig. 15** illustrates an implementation of a method for authentication of an A-loT device and a communication node according to the third example of embodiment 2.

The system and the method is particularly similar as in system illustrated in Figs. 11 and 13. Therefore, repetitive description of similar or equal aspects will be omitted. For instance, the first and second A-loT devices 300, 310 as well as the network node 330 store the same keys as in Fig. 11. Further, the general flow of the method is similar to Fig. 11 and 13.

The network node 330 intends to trigger the A-loT devices 300, 310 of group ID = 1, for instance, in an "inventory" or "command" service framework. For this purpose, the network node determines an authentication vector using a RAND variable (an example of a function input value), a cryptographic function, and the group key K_{group1}, in particular resulting in an authentication token AUTH_{group1} (an example of a first authentication token). In step S500, a paging request is transmitted indicating the group ID = 1, including AUTH_{group1} and indicating RAND to the A-loT reader 320. The A-loT reader 320 performs paging of the first and second A-loT devices 300, 310 in step S502. For instance, Msg0 is transmitted to each of said A-loT devices 300, 310, and respective response Msg1 is received from the devices. In step S504, the A-loT reader 320 transmits Msg2 (an example of the first message) to the A-loT devices 300, 310. The transmitted Msg2 includes the first authentication token AUTH_{group1} and the function input value RAND. The authentication token AUTH_{group1} may include a message authentication code (MAC)

Each of the A-loT devices 300, 310 obtains an expected message authentication code (XMAC), similar to the example 2 of embodiment 2. However, rather than computing the expected authentication code, the A-loT devices 300, 310 make reference to association data stored in memory. The association data associates the function input value RAND with an expected MAC and, optionally, a response token RES and an encryption key for encrypted communication. The stored MAC is an example of a second authentication token. If the codes do not match each other, the communication node (A-loT reader 320 and/or network node 330) is determined as not being authenticated. Further, if the network is authenticated, each A-loT device determines a response token by making reference to the association table as stored in memory rather than by invoking a response derivation function. Subsequently the response token (included in device authentication data) is transmitted from the A-loT devices 300, 310 to the A-loT reader 320 in S506 and S510, respectively. Further, the A-loT devices 300, 310 may encrypt respective device IDs using the encryption key K_{encr} associated with the received RAND value and transmit the encrypted device IDs to the A-loT reader in S506 as well. A paging response including the response token and, optionally, the encrypted device ID, is transmitted to the network node 330 in a paging response in S508 and S512, respectively. The network node 330 may subsequently verify/authenticate the first and the second A-loT devices 300, 310 by generating an expected response token in the same manner as in example 3 of embodiment 2 and compare the expected response token to the received response token. If the tokens do not match, the respective A-loT device is considered as not being authenticated. On the other hand, if the tokens match each other, the respective A-loT device may be determined as being authenticated. However, there may be other conditions to be met in order for the A-loT device to be determined authenticated.

In the approach as illustrated above, the number of authentication tokens that can be used for authentication of the network node is limited by the number of pre-obtained tokens as indicated by the association data. Therefore, ideally, an authentication token should be indicated in the association data for each potential function input value RAND. If the RAND is a 32 bit value, for example, this would result in 2³² pre-obtains and stored authentication tokens, which could exceed the capabilities of the memory of the A-loT device.

In view thereof, in a modification, an approach similar to the indexed tables used in the above examples for device and group keys may be applied to the association data. That is, the association data may be an indexed table, and the circuitry, in operation, may obtains the second authentication token, a response token and/or a device key by applying a predetermined index shuffling rule to the indexed table.

In other words, fixed authentication tokens may be stored in the memory as an indexed table and the table index is referred using an index shuffling rule determined secretly between the A-loT device and the network and used when authentication is to be performed.

**Table 2a**

| | **A-IoT device 1** | | |
|---|---|---|---|
| **Table (key) index [1, 2]** | **RAND list** | **Stored tokens** | |
| | RAND(1) | MAC(1) | RES(1) |
| | RAND(2) | MAC(2) | RES(2) |
| | RAND(3) | MAC(3) | RES(3) |
| | RAND(4) | MAC(4) | RES(4) |

**Table 2b**

| | **A-IoT device 2** | | |
|---|---|---|---|
| **Table (key) index [1, 3]** | **RAND list** | **Stored tokens** | |
| | RAND(1) | MAC(1) | RES(1) |
| | RAND(2) | MAC(2) | RES(2) |
| | RAND(3) | MAC(3) | RES(3) |
| | RAND(4) | MAC(4) | RES(4) |

**Table 2c**

| | **A-IoT device 2** | | |
|---|---|---|---|
| **Table (key) index** | **RAND list** | **Stored keys for MAC** | |
| **Device ID-1 [1, 2]** | RAND(1) | K_{MAC1} | K_{RES1} |
| **Device ID-2 [1, 3]** | RAND(2) | K_{MAC2} | K_{RES2} |
| | RAND(3) | K_{MAC3} | K_{RES3} |
| | RAND(4) | K_{MAC4} | K_{RES4} |

Tables 2a and 2b illustrate the authentication tokens MAC and RES as stored in the association data by the A-loT devices 300, 310. Each of the devices stores four authentication tokens MAC(1) to MAC(4) for authentication of the network and four response tokens RES(1) to RES(4) for transmission to the communication node for authentication of the A-loT device, each in association with one function input value RAND(1) to RAND(4). The communication node stores keys K_{MAC1} to K_{MAC2} and K_{RES1} to K_{RES4} in association with the RAND values RAND(1) to RAND(4) for derivation of group authentication tokens and response tokens for authentication of the A-loT devices 300, 310. The table (key) index indicates which group and device key are to be used for the next authentication process. Specifically, the first value (1 for the first and second A-loT devices) indicates the row of the column indicating the MAC authentication token. The second value (2 for the first A-loT device and 3 for the second A-loT device) indicates the row of the column indicating response tokens RES. After the authentication process, the table key indices for the next authentication process are determined by each of the A-loT devices and the communication node according to a predetermined or pre-obtained shuffling rule.

For example, as already detailed above, synchronizing signals (or counts) may be transmitted by the A-loT reader to align the device radio and keep track of subframes and slots which are used for transmitting or receiving data packets. Such signals can be used to update the current table index references. For example, if a subframe counter transmitted by the A-loT reader includes 10 bits, then each counter rolling over from 1023 to 0 can be used to increment the table index by 1. However, another rule may be used.

In a different example, as already detailed above if GPS/UTS is supported (or transmitted in R2D by the A-loT reader), a certain time (day, month, year) may be used to determine the specific index value to be used for authentication. In this case, the index reference can be either stored in volatile memory and updated as per the current time or it may be dynamically determined.

In a case where the index table/the tables are not synchronized between the A-loT device and the network/the communication node, the A-loT device could be updated using a maintenance software, e.g. wired equipment) to update the latest used key index reference. Such maintenance software may also be used for updating the stored keys themselves.

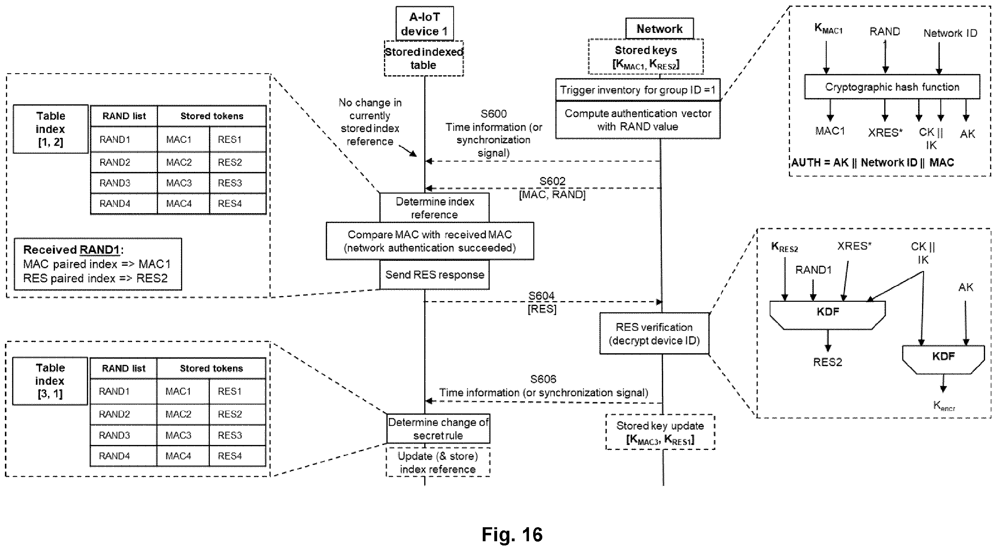

**Fig. 16** illustrates an example of determination of authentication tokens according to the third example of the second embodiment. The derivation of the first authentication token and the expected response token at the network side differs from the derivation as illustrated in Fig. 14 in that the keys used as input for the cryptographic hash function (e.g. K_{MAC1} and K_{RES2}) are stored in memory in association data rather than being fixed. In step S600, the network may provide a synchronization signal. In step S602, the first authentication token (MAC) and the function input value RAND is transmitted to the A-IoT device, which responds in step S604 with a determined response token.

As illustrated on the left hand side of Fig. 16, the response token is determined using the association data providing the response token RES for the received RAND value. Further, for authentication of the network, the A-loT device determines the expected MAC token (an example of second authentication token) from the association table using the received RAND value and performs authentication of the network by comparing the received MAC token with the MAC token as included in the association data.

In step S606, the network transmits a further synchronization signal, thereby triggering shuffling of the indices used for determination of the authentication and response token at the A-loT device. Accordingly, the network (communication node) updates its keys for derivation of authentication tokens and response tokens. In the A-loT device, the indices into the association data are shuffled according to the shuffling rules, resulting in different MAC and/or RES tokens being determined in the next authentication procedure.

In addition to the above, an encryption key may also be associated with the authentication token in the association data. The A-loT device may determine the encryption key to be used for encryption of, for example, the device ID, in the same manner as in the determination of the MAC authentication token and/or the response token.

**Table 2d**

| | **A-IoT device 1** | | | |
|---|---|---|---|---|
| **Table (key) index [1, 2, 4]** | **RAND list** | **Stored tokens** | | **Stored key** |
| | RAND(1) | MAC(1) | RES(1) | K_{enc1} |
| | RAND(2) | MAC(2) | RES(2) | K_{enc2} |
| | RAND(3) | MAC(3) | RES(3) | K_{enc3} |
| | RAND(4) | MAC(4) | RES(4) | K_{enc4} |

Table 2d illustrates such an indexed table representing association data that associates not only authentication tokens and response tokens, but also encryption keys K_{enc1} to K_{enc4}, to respective function input values RAND(1) to RAND(4). The index used for derivation of an encryption key may be updated/shuffled in the same manner as for the authentication and response tokens. With this approach, an enhanced protection may be achieved compared to a case where static keys are used for encrypted communication.

According to example 3 of embodiment 2, a very low complexity is achieved at the A-loT device side, resulting in a reduced computation burden at the device. This is achieved by obtaining the authentication token, the response token and/or the encryption key by a simple memory access.

Further, if cryptographic hash functions are used for generating the pre-computed authentication/response tokens, a similar level of security may be achieved.

### Example 4 of embodiment 2

Example 4 of embodiment 2 focuses on the authentication of the A-loT reader and the network separately. That is, the A-loT device may perform authentication of the A-loT reader and authentication of the network node. For this purpose, the A-loT device may apply procedures as described in connection with example 1 of embodiment 2 and example 2 of embodiment 2 or in connection with example 1 of embodiment 2 and example 3 of embodiment 2.

Specifically, for example, a 2-level authorization may be performed using an encrypted text encrypted by the A-loT device as first authentication data of the A-loT reader and using a first authentication token provided by a network node. In this respect, it is to be noted that the determination of an authentication token by the A-loT device may be performed using cryptographic hash functions (as in example 2 of embodiment 2) or using association data (as in example 3 of embodiment 2).

That is, encryption and decryption of a random text may be performed for authentication of the A-loT reader and derivation of authentication tokens and response tokens may be performed for authentication of a network node.

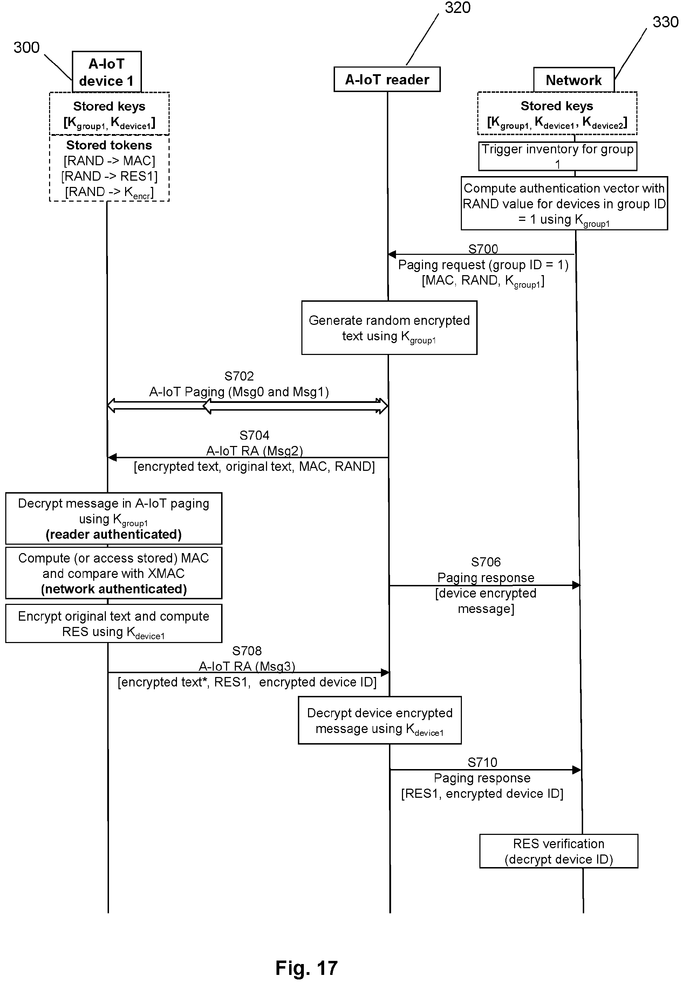

**Fig. 17** illustrates an implementation of a method for authentication of an A-loT device and a communication node according to a fourth example of the second embodiment. The system comprises at least one A-loT device 300, an A-loT reader 320 and a network node 330. The network node stores a group key K_{group1} as well as device keys for the A-loT devices, in particular the A-loT device 300. When triggering loT devices in group with group identifier 1, the network node 330 computes an authentication vector using a RAND value and K_{group1}. An authentication token MAC, the RAND value and the group key K_{group1} is transmitted in a paging request to the A-loT reader 320 in step S700. The A-loT reader then generates an encrypted random text using the received group key K_{group1}, performs A-loT paging in step S702 and transmits the encrypted text, the original text, the authentication token MAC, and the function input value RAND to the A-loT device 300. The A-loT device 300 stores the group key K_{group1} and the device key K_{device1} specific to the A-loT device 300. Using the group key K_{group1}, the A-loT device decrypts the encrypted text and compared the decrypted text with the original text. If the texts do not match, the A-loT reader 320 is not authenticated. If the texts match each other, the A-loT reader 320 may be determined as authenticated. Further, the A-loT device 300 obtains a second authentication token for comparison with the received first authentication token (MAC). This may be performed as described in example 2 or as described in example 3, i.e. by using cryptographic hash functions and key derivation functions, or by making reference to association data. If the second authentication token is determined using a cryptographic hash function, the A-loT device 300 is not required to store the association data. If the received (first) authentication token matches the obtained (second) authentication token, the network node 330 may be determines as being authenticated. If the network node 330 and the A-loT reader 320 are determined as being authenticated, the A-loT device 300 may encrypt the text using K_{device1}, determine a response token, and transmit the same, optionally with the device ID encrypted using K_{device1} to the A-loT reader 320 in step S708 for authentication of the A-loT device 300 by the A-loT reader using the encrypted text. Further, a paging response including the response token RES may be transmitted in step S710 from the A-loT reader 320 to the network node 330 for authentication of the A-loT device 300 by the network node 330.

With this approach, robust authentication at different levels of authentication may be achieved. This is due to the effect that lower level messages and upper level messages may be authenticated independently.

It is to be noted that the present disclosure is not limited to the specific approach as described with reference to Fig. 17. For example, authentication tokens may be used for authentication of the A-loT reader 320 and an encrypted text may be used for authentication of the network node 330. In this case, the operations as described above for the A-loT device 320 in relation to the generation of the encrypted text and the authentication of the loT device may be performed by the network node 330. Similarly, the operations as described above for the network node 330 in relation to the generation of authentication tokens and the authentication of the loT device may be performed by the A-loT reader 320.

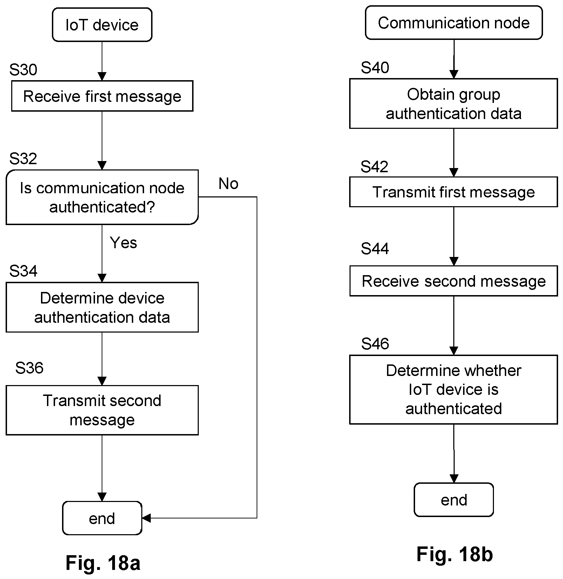

**Fig. 18a** illustrates the steps of a method performed by an loT device according to the second embodiment (examples 1 through 3). In step S3, the loT device receives a first message indicating group authentication data common to a group including the loT device. Further, in step S32, the authentication of the communication node is performed using the group authentication data. If the communication node is authenticated (Yes in step S32), device authentication data specific to the loT device is determined in step S34 and transmitted in a second message to the communication node in step S36.

**Fig. 18b** illustrates the steps of a method performed by a communication node according to the second embodiment (examples 1 through 3). In step S40, the communication node obtains group authentication data common to a group including an loT device. Further, in step S42, a first message is transmitted to each device included in the group, the first message indicating the group authentication data. In step S44, a second message is received from the loT device, indicating device authentication data. Subsequently, it is determined whether the loT device is authenticated using the device authentication data in step S46.

### Embodiment 3

In this embodiment, authentication of an A-loT device may be performed after identification of the A-loT device by the network (a communication node like an A-loT reader or a network node). For this purpose, a device identifier (device ID) unique to the A-loT device may be transmitted during a random access procedure. For example, the device ID may be transmitted in Msg3 of a 3-step random access procedure or in Msg1 in a 2-step random access procedure. However, due to the limited capabilities of A-loT devices, e.g. in computing power or memory characteristics, transmitting a comparably large (in data size) ID like SUCI may cause issues, in particular in a case where the device ID should be encrypted or concealed for security reasons.

The present embodiment addresses this issue by using a smaller (in data size) identification value for identification purposes within a group of A-loT devices for identification to initiate authentication.

Provided is an Internet of Things, loT, device, associated with a first device identifier unique among a plurality of device identifiers associated with a respective plurality of loT devices, wherein the loT device is included in a group associated with a group identifier. The loT device comprises a transceiver which, in operation, receives a first message from a communication node, indicating the group identifier. The loT device further comprises circuitry which, in operation, determines a second device identifier, the second device identifier having a smaller data size than the first device identifier, wherein the transceiver, in operation, transmits a second message indicating the second device identifier to the communication node.

Further provided is a communication node, comprising a transceiver and circuitry. The transceiver, in operation, transmits a first message to an Internet of Things, loT device, indicating a group identifier. The loT device is associated with a first device identifier unique among a plurality of device identifiers associated with a respective plurality of loT devices, and the loT device is included in the group associated with the group identifier. The transceiver, in operation, receives a second message from the loT device, indicating a second device identifier having a smaller data size than the first device identifier.

That is, according to embodiment 3, an identifier smaller in data size than a unique identifier, which is associated to an loT device, is utilized for identification purposes of an loT device included in a certain group of devices instead of the unique identifier. With this approach, the loT device may still be uniquely identified within the group of devices, in a case where the second device ID is unique among the devices included in the group. On the other hand, if the loT device cannot be uniquely identified among the devices included in the group using the second device ID, the loT device may still be uniquely identifies during the subsequent authentication procedure. This will be described in detail in the examples provided further below.

The second device identifier may be obtained by truncating the first device identifier.

In other words, in a case where the first device identifier is a sequence of bits, the second device identifier may be a subset of said sequence of bits. For example, the first device ID may be truncated such that a certain (pre-determined, pre-obtained) number of leading or trailing bits is used as the second device ID. For example, if the first device ID is given by 11101, the second device identifier may be obtained as the three trailing bits of the first device identifier, resulting in a second device ID of 101. In a more realistic example, a unique device ID may be represented by 64 bits. In this case, the second device ID may be represented by 32 bits, which may be the leading 32 bits, the trailing 32 bits or any other suitable subset of bits of the first device ID.

In other words, the second device identifier may be obtained by truncating the first device identifier to a number of bits, wherein the number of bits is predetermined, associated with the group ID, or indicated in the first message.

Alternatively, instead of using a truncated version of the first device ID as the second device ID, a temporary device ID may be utilized as the second device ID. Such a temporary device ID exhibits a smaller data size than the first device ID and may be pre-assigned to or pre-obtained by the loT device, for example.

In other words, the loT device may be assigned a temporary device identifier having a smaller data size than the first device identifier. Further, the circuitry of the loT device may determine the temporary device identifier as the second device identifier.

In a modification, the loT device may be assigned multiple group identifiers. That is, the loT device may be associated with multiple group identifiers. In this case, the loT device may be assigned with multiple temporary device identifiers, wherein one temporary device ID is associated with one group identifier. If the group of a certain group identifier is triggered, the loT device may use the corresponding/associated temporary device identifier as the second device identifier.

In addition or alternatively, one temporary device identifier may be associated with multiple group identifiers. In this case, the temporary device identifier is used as the second device identifier if one of the associated group ID is triggered. In other words, said temporary device identifier may be used if any of the groups associated with the temporary device identifier is triggered.

After identification of the loT device by a communication node of the network, e.g. an A-loT reader or a network node, mutual authentication of the A-loT device and the communication node may be performed. This authentication process may be any of the authentication processes as described above, e.g. in the framework of embodiment 2.

In other words, the transceiver of the loT device may receive an authentication request indicating an authentication challenge from the communication node. The circuitry of the A-loT device may perform authentication of the communication node. If the communication node is authenticated successfully, the circuitry, in operation, determines authentication response data and the transceiver, in operation, transmits an authentication response indicating authentication response data to the communication node

In this framework, if the communication node is authenticated successfully, the circuitry, in operation, may encrypt the first device identifier using a device key associated with the loT device. The transceiver, in operation, may transmit the encrypted first device identifier to the communication node.

That is, according to embodiment 3, the second device ID may be utilized for identification purposes of the loT device before authentication. After authentication, the first device ID (i.e. the full device ID uniquely identifying the loT device) may be transmitted in a concealed/encrypted manner.

On the other hand, if the communication node is not authenticated successfully, the transceiver, in operation, may transmit an authentication response indicating that authentication of the communication node has failed.

In the framework of authentication, the authentication may be performed as described in embodiment 2 and respective examples. That is, authentication may be based on group authentication data using, for example, encrypted data, group keys and/or device keys, as described, for example, in example 1 of embodiment 2, or using authentication tokens as described, for example, in examples 2 and 3 of embodiment 2. The authentication tokens may be pre-obtained as in example 3 of embodiment 2 or may be computed when an authentication request is received, e.g. using cryptographic hash function, as in example 2 of embodiment 2.

That is, in other words, the loT device may comprise memory which, in operation, stores association data associating the authentication challenge with the authentication response data.

Alternatively, the circuitry of the loT device may determine the authentication response data using a device key associated with the loT device, the authentication challenge, and a response derivation function.

In this respect, it is to be noted that the authentication challenge may refer to the data transmitted by the loT readerto the loT device for authentication, e.g. the group authentication data, the encrypted data and the first data, a first authentication token, as described in the previous embodiments, or any other suitable data that may be used for authentication of the communication node.

It is to be emphasized that the authentication as described in embodiment 2 may also be applied in embodiment 3. However, the disclosure is not limited thereto, and a different authentication process may be performed. For this reason, the data for authentication is denoted "authentication challenge" rather than "group authentication data", as in embodiment 2. This authentication challenge may be specific to the loT device, though paging may still be performed in consolidation of the entire group, as in embodiments 1 and 2.

Further, the authentication response data may refer to data transmitted by the loT device to the loT reader for authentication, e.g. the device authentication data, the encrypted first data, the response token, as described in the previous embodiment, or any other suitable data that may be used for authentication of the loT device.

Details on the authentication and, in particular, the behavior of the communication node (e.g. an A-loT reader or a network node) are described in the following examples.

### Example 1 of embodiment 3

Example 1 of embodiment 3 illustrates a situation where an loT device can be uniquely identified among a plurality of devices included in a certain group of devices using the second device ID. In other words, in this example, the second device ID having a smaller data size than the first device ID (which uniquely identifies the loT device among all devices) is sufficient to identify the loT device among the devices included in a specific group.

Further, in this example, mutual authentication of the loT device and the communication node is performed using the approach of example 2 of embodiment 2. Therefore, details of the authentication processes will not be described in the following, but reference is made to the detailed description of said example 2 of embodiment 2.

However, embodiment 3 is not limited thereto, but authentication may also be performed in the same or similar manner as explained in examples 1, 3 or 4 of embodiment 2.

As already indicated above, the disclosure is not limited to the authentication process as described in connection with embodiment 2, and any other authentication may be performed. In this respect, it is to be noted that the authentication may not be performed in a common manner for the entire group, but may be specific to the loT device. That is, for example, rather than using a group key K_{group#} and one or more device keys K_{device#}, only device keys may be used in an authentication specific to an loT device.

According to example 1 of embodiment 3, provided is a communication node as described in above, wherein the circuitry of the communication node, in operation, determines whether the loT device can be uniquely identified within the group using the second device identifier.

Further, if it is determined that the loT device can be uniquely identified within the group using the second identifier, the circuitry, in operation, determines an authentication challenge using a device key associated with the loT device. The transceiver, in operation, transmits an authentication request indicating the authentication challenge to the loT device, and receives an authentication response indicating authentication response data and an encrypted first device identifier. Further, the circuitry, in operation, performs authentication of the loT device using the authentication response data, and decrypts the first device identifier using the device key associated with the loT device.

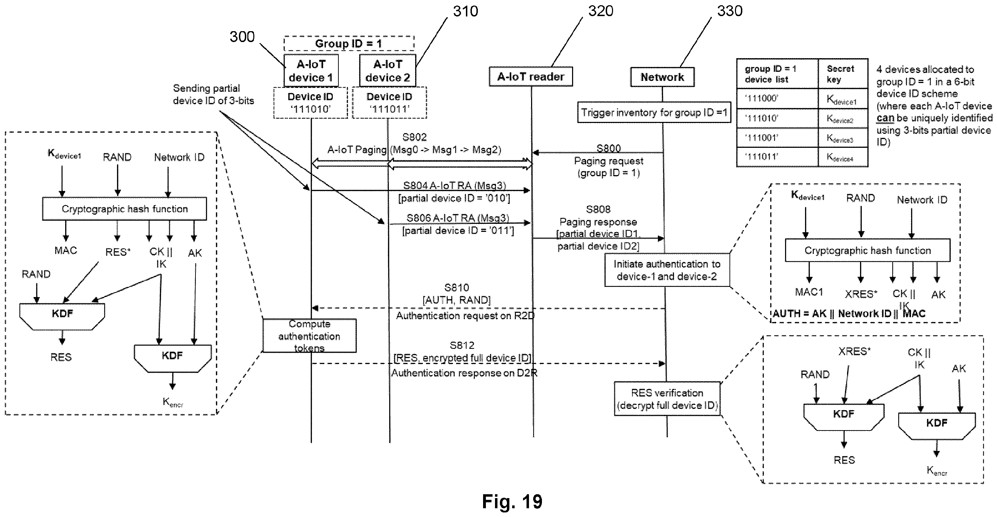

**Fig. 19** illustrates an implementation of a method for authentication of A-loT devices 300, 310 and a communication node according to the first example of embodiment 3. Steps S800 and S802 correspond to steps S300 and S302. Therefore, a detailed description of these steps is omitted. In steps S804 and S806, the first A-loT device 300 and the second A-loT device 310 transmit respective second device IDs to the A-loT reader 320, which forwards the second device IDs to the network node 330. As described above, the second device IDs may be truncated versions of the first device IDs, which are unique for all loT devices. In the present example, the group (group ID = 1) includes four A-loT devices, as illustrated in the upper right section of Fig. 19. The first device IDs of said loT devices are `111000', `111010', `111001', and `111011'. In a case where the second device ID is obtained by using the three trailing bits of the first device ID, the second device IDs differ for each of the loT device included in the group. Specifically, the resulting second device IDs are '000', `010', `001' and '011'. Therefore, the A-loT reader 320 as well as the network node 330 may uniquely identify the loT devices 300 and 310 using the respective second device IDs and the knowledge on the device IDs of the devices included in the group. Accordingly, the first and the second loT devices may be identified successfully. The subsequent steps S810 and S812 relate to the mutual authentication of the loT devices 300, 310 and the network (e.g. the loT reader 320 and/or the network node 330) and correspond to steps S304 to S312 of Fig. 13 and steps S400 and S402 of Fig. 14. Therefore, a detailed description is omitted here. However, in short, the loT devices 300, 310, the loT reader 320 and the network node 330 perform mutual communication using authentication tokens (AUTH_{group1}, RAND, RES, ...) obtained by using a cryptographic hash function and key derivation functions, as described in example 2 of embodiment 2. However, the authentication is not limited thereto, and any other authentication scheme, in particular the ones described in examples 1, 3, and 4 of embodiment 2 may be applied.

It is to be noted that the number of bits for truncation of the first device identifiers may be fixed for each group of devices or may be dynamically indicated during a random access procedure. In other words, the communication node may transmit an indication to an loT device indicating the number of bits for truncation of the first device ID.

In a first implementation, A-loT devices may store a group ID and the number of bits for the second device ID in memory. If a certain group of A-loT devices is triggered by the network, respective A-loT devices may make reference to the memory and obtain the number of bits associated with the group ID for determination of the second device ID.

In a second implementation, a message received by an A-loT device from a communication node may include the group ID and, in addition, the number of bits for determination of the second device ID.

These approaches may require a certain level of pre-planning to allocate devices within each A-loT group if a partial (truncated) device ID is used as the second device ID. In view thereof, a temporary ID associated with each A-loT device may be used rather than a truncated device ID.

### Example 2 of embodiment 3

Example 2 of embodiment 3 illustrates a situation where an loT device cannot be uniquely identified among a plurality of devices included in a certain group of devices using the second device ID. In other words, in this example, the second device ID having a smaller data size than the first device ID (which uniquely identifies the loT device among all devices) is not sufficient to identify the loT device among the devices included in a specific group, due to, for example, ambiguity

Further, in this example, mutual authentication of the loT device and the communication node is performed using the approach of example 2 of embodiment 2. Therefore, details of the authentication processes will not be described in the following, but reference is made to the detailed description of said example 2 of embodiment 2.

However, embodiment 3 is not limited thereto, but authentication may also be performed in the same or similar manner as explained in examples 1, 3 or 4 of embodiment 2.

According to example 2 of embodiment 3, provided is a communication node as described in above, wherein the circuitry of the communication node, in operation, determines whether the loT device can be uniquely identified within the group using the second device identifier.

Further, if it is determined that the loT device cannot be uniquely identified within the group using the second device identifier, the circuitry, in operation, determines a subset of loT devices included in the group and compliant with the second device identifier and determines a plurality of authentication challenges, using respective device keys associated the subset of loT devices. The transceiver, in operation, transmits at least one authentication request indicating the determined authentication challenges to the loT device and receives at least one authentication response from the loT device indicating authentication response data and an encrypted first device identifier. Further, the circuitry, in operation, identifies the loT device based on the device key used for determination of the authentication challenge, for which the authentication response indicates the authentication response data and the encrypted first device identifier.

In other words, the communication node identifies the loT device using not only the second device ID, but the messages received in response to an authentication request. Specifically, if an A-loT device, after having received an authentication request and after having performed authentication of the communication node, may transmit an authentication response that either indicates that authentication has failed or includes authentication response data and an encrypted device identifier. That is, if the communication node receives an indication from the A-loT device that authentication of the communication node has failed, the communication node may determine that the authentication challenge provided to the A-loT device has been determined not using the correct device key. Therefore, the A-loT device can be determined as not being associated with the used device key. Conversely, if the authentication response does not indicate that that authentication of the communication node has failed, it can be concluded that the correct device key has been used for determination of the authentication challenge. Accordingly, the A-loT device can be successfully identified.

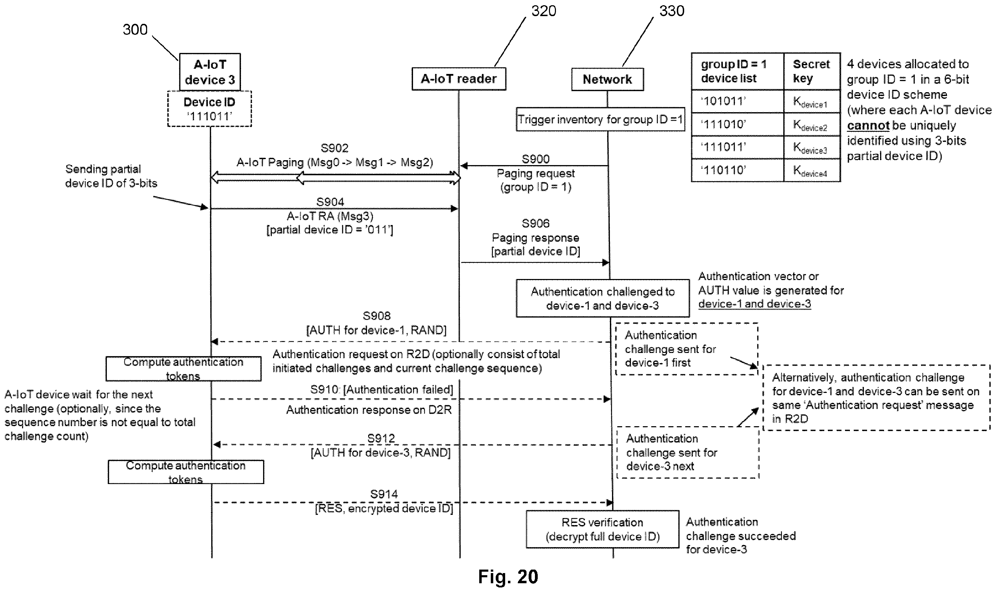

**Fig. 20** illustrates an implementation of a method for authentication of an A-loT device 300 and a communication node according to the second example of the third embodiment. Steps S900, S902, S904 and S906 essentially correspond to steps S800, S802, S804 and S806 of Fig. 19. However, the A-loT devices included in the group (group ID=1) cannot be uniquely identified using the second device ID. For example, the group may include device IDs '101011', '111010', 111011' and `110110'. In this exemplary case, the A-loT devices '101011' and `111011' cannot be distinguished using a second device ID that corresponds to the last three bits of the first device ID, namely '011'. In such a case, the network node 300 determines two authentication challenges, e.g. using the device keys K_{device1} and K_{device3} associated with the A-loT devices that cannot be distinguished based on their second device IDs. Said challenges are then transmitted to the A-loT device 300 in steps S908 and S912. In response thereto, the communication node receives an authentication response in each of steps S912 and S914. Since the A-loT device 300 uses the device key K_{device3} for authentication of the communication node, it will determine that the communication node is not authenticated based on the authentication challenge received in step S908, which has been obtained by the communication node using device key K_{device1}. Conversely, the A-loT device 300 determines that the communication node is authenticated based on the authentication challenge received in step S912, which has been obtained by the communication node using device key K_{device3}. Accordingly, the authentication response transmitted in step S912 indicates that authentication of the communication node has failed, and the authentication response transmitted in step S914 indicates authentication response data. Upon reception of this information, the communication node (e.g. the A-loT reader 320 or the network node 330) may deduce that the A-loT device 300 is the third A-loT device associated with the first device identifier '111011'. In other words, by successfully authenticating the A-loT device 300 at the network side using the authentication response received from the A-loT device 300, the A-loT device 300 may be identified uniquely.

It is to be noted that the present disclosure is not limited to the above and, in particular, the authentication challenges transmitted to the A-loT device 300 is not necessarily transmitted in separate messages, but may be transmitted in a single message. In this case, the A-loT device 300 performs authentication for each of the challenges and checks if at least one challenge is succeeded, i.e. that authentication is successful for at least one of the challenges. The A-loT device 300 may then respond with the corresponding authentication response (e.g. including the corresponding authentication response token) to be authenticated by the network, where the received authentication response is used for authentication of the A-loT device 300. Optionally, the succeeded AUTH token may also be transmitted in the authentication response in order to ensure correct mapping to the corresponding AUTH token.

It is further to be noted that the present disclosure is not limited to the above implementation, wherein the second device identifier is a truncated version of the first device identifier and ambiguity is due to the truncated version of the first device identifier is equal for two or more loT devices in the group. In a modification, temporary identifiers may be used as second device identifiers. If the number of available temporary identifiers in a group exceeds the number of loT devices within the group, the same approach as described above may be applied, i.e. authentication may be utilized for identification purposes. This may be the case if, for example, a three bit temporary identifier is used. This allows for eight unique temporary identifiers (within the group). If there are more than eight loT devices in the group, the same temporary identifier is assigned to at least two loT devices within the group. Identification of said loT devices may be performed in the same or similar manner as explained in detail above. That is, authentication challenges may be transmitted to the loT device having an ambiguous temporary ID and the loT device is identified based on the response received from the ioT device.

Ideally, the number of available/possible temporary identifiers should not exceed the number of loT devices within a group. Therefore, the size of the temporary identifiers may be increased with increasing number of loT devices included in the group. However, due to concerns of energy consumption or coverage of the loT devices to (re)assign identifiers to each device within the group, the size of the temporary identifiers may be maintained (e.g. temporarily maintained) and the ambiguity may be handled using the approach of this example. For example, this may be performed temporarily until a new identifier having an adjusted size is assigned to each of the loT devices.

With the approach of example 2 of embodiment 3, grouping of A-loT devices within a group may be more flexible than in the approach of example 1 of embodiment 3, hence it may be ensured that an A-loT device can be uniquely identified by utilizing authentication for identification purposes in case of ambiguities of the second device IDs. Hence, new devices of a random or arbitrary first device ID may be added into any group. Thereby, the flexibility of group management may be increased.

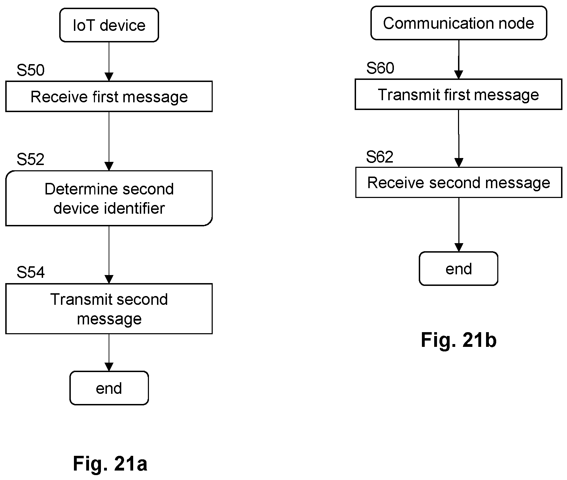

**Fig. 21a** illustrates the steps of a method performed by an loT device according to embodiment 3. The loT device is associated with a first device identifier unique among a plurality of device identifiers associated with a respective plurality of loT devices, wherein the loT device is included in a group associated with a group identifier. In step S50, a first message is received from a communication node, indicating the group identifier. In step S52, a second device identifier is determined, the second device identifier has a smaller data size than the first device identifier. In step S54, a second message indicating the second device identifier is transmitted to the communication node.

**Fig. 21b** illustrates the steps of a method performed by a communication node according to embodiment 3. In step S60, a first message is transmitted to an loT device, indicating a group identifier, wherein the loT device is associated with a first device identifier unique among a plurality of device identifiers associated with a respective plurality of loT devices, and the loT device is included in the group associated with the group identifier. In step S62, a second message is received from the loT device, indicating a second device identifier having a smaller size than the first device identifier.

### Further implementations

As mentioned above, there may be numerous loT devices communicating with a node. The loT devices may not have the legacy RRC states, ARQ, and HARQ. Therefore, a contention-based channel may be used to initiate communication. However, this could cause excessive attempts for channel access, which may result in collisions and performance degradation. Further, proximity/distance/direction determination might be required for a node. Further, some loT devices have a limited energy capacity. The energy could be obtained from the environment (vibration, light, heat) or a carrier wave, e.g., provided by the gNB/intermediate node. It may implement, e.g. repetitions to increase robustness.

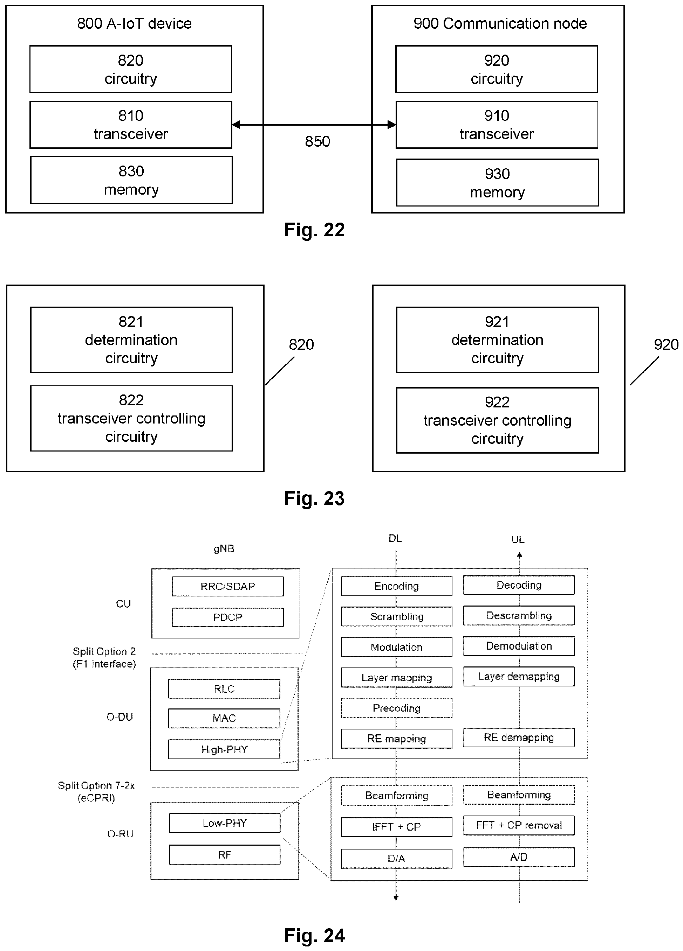

**Fig. 22** illustrates a general, simplified and exemplary block diagram of an loT device 800 and a communication node (base station or intermediate node connected to a base station) 330 forming a communication system. The loT device 800 may be a wearable, smart home device, automotive device, sensor, smart key, or healthcare device, for example.

The loT device 800 and the communication node 900 are communicating with each other over a (wireless) physical channel 850, respectively, using their transceivers 810 (loT device side) and 910 (communication node side). The communication node 900 and the loT device 800 are capable of transmitting as well as receiving signals via the channel 850. Together, the communication node 900 and the loT device 800 form a communication system, for example, a 5G or future communication system. The communication system may further include other entities such as further base stations, intermediate nodes, A-loT readers, and/or loT devices. Any of the above-described embodiments may be implemented in the A-loT device 800, the communication node 900 and/or communication system where appropriate. For example, the communication node 900 may be an A-loT reader 320 or a network node 330. For example, the communication node 900 may be formed by an A-loT reader 320 and the network node 330.

The loT device 800 comprises a transceiver 810, (processing) circuitry 820, and memory 930 and the communication node 900 comprises a transceiver 910 a (processing) circuitry 920, and memory 930. The transceiver 810, 910 in turn comprise and/or function as a receiver and/or a transmitter. In this disclosure, in other words, the term "transceiver" is used for hardware and/or software components that allow the loT device 800, and the communication node 900 to transmit and/or receive signals over a wireless channel, for example, a physical channel. Moreover, the term "circuitry" includes processing circuitry formed by one or more processors or processing units, etc.

The circuitry 820 may perform any determinations and operations described above with respect to the embodiments. The transceiver 810 may transmit and/or receive signals as described with respect to the embodiments. The circuitry 820 may control the transceiver 810 to perform the transmissions and/or receptions. The memory 830 may store any data described above.

The circuitry 920 may perform any determinations and operations described above with respect to the embodiments. The transceiver 910 may transmit and/or receive signals as described with respect to the embodiments. The circuitry 920 may control the transceiver 910 to perform the transmissions and/or receptions. The memory 930 may store any data described above.

The circuitries may be configured by software to perform the functions as described in any of the above embodiments. As shown in **Fig. 23****,** the circuitry 820 of the loT device 800 may further comprise a functional module referred to as determination circuitry 821 for performing determinations. A transceiver controlling circuitry 822 is a functional module that controls the transceiver 810 to receive the trigger signal. Moreover, as shown in **Fig. 20****,** the circuitry 920 of the communication node 900 may further comprise a functional module referred to as determination circuitry 921 for performing any determinations. A transceiver controlling circuitry 922 is a functional module that controls the transceiver 910.

Moreover, it is noted that the loT device as described in any of the above embodiments and examples, may be integrated on an integrated circuit (IC). Moreover, the integration does not necessary include the entire transceiver. The transceiver is, in general, not necessarily a part of the loT device. The loT may be connected to an external antenna (module) connected to the loT device over a port on the loT device. Similar structure applies to the node.

Moreover, a computer program is provided including code instructions stored on a non-transitory medium, which when executed on one or more processor, causes the one or more processors to execute a method according to any of the above mentioned embodiments and examples.

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signaling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so). The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Open-RAN

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

**FIG. 24** illustrates an example in which the base station functionality of the gNB is subjected to functional splitting into CU, O-DU, O-RU by Split Option 2 and Split Option 7-2x.

CU may include, for example, an RRC (radio resource control) function, an SDAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse First Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (First Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### SBFD

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### XDD: Cross Division Duplex

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### Control Signals

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### AMF

AMF, or Access and Mobility Management Function, is a pivotal component within wireless communication networks like LTE or 5G networks. It's tasked with multiple critical functions. Firstly, AMF governs access to the network, verifying and allocating resources to authenticated users. Secondly, it manages user mobility, facilitating smooth handovers between cells or network slices as users move, ensuring uninterrupted connectivity. Thirdly, AMF oversees session establishment, modification, and termination, maintaining session context for efficient data routing. Additionally, it enforces network policies, such as Quality of Service (QoS) and security policies, ensuring adherence and optimizing resource usage. Furthermore, AMF handles user authentication and security, establishing secure communication channels to safeguard data. It operates within the control plane, while the user plane handles data forwarding, enhancing scalability and efficiency. AMF also enables seamless roaming by interfacing with other network functions and supporting interoperability. Moreover, it implements and manages network policies and rules to prioritize traffic and allocate resources effectively. Lastly, AMF ensures service continuity and resilience by orchestrating handovers and mobility management procedures, minimizing disruptions during network changes or failures. Details can be found, for instance, in 3GPP TS 29.518 V18.4.0: "3rd Generation Partnership Project; Technical Specification Group Core Network and Terminals; 5G System; Access and Mobility Management Services; Stage 3 (Release 18)".

### Terminal

A terminal or user terminal or user device or mobile station or mobile node is referred to in the LTE and NR as a user equipment (UE). This may be a mobile device or communication apparatus such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as loT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

### Base Station

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in sidelink communication, a terminal may be adopted instead of a base station. The base station may be a relay apparatus that relays communication between a higher node and a terminal. The base station may be a roadside unit as well.

### Uplink/Downlink/Sidelink

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### Data Channels/Control Channels

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### Reference Signals

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### Time Intervals

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### Frequency Bands

The present disclosure may be applied to any of a licensed band and an unlicensed band.

### Communication

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### Antenna Ports

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

### Ambient IoT

The terminal and the base station in one exemplary embodiment of the preset disclosure may be replaced with any of an Ambient loT Device or an Ambient loT Reader.

The Ambient loT Device may be a wireless communication device having a backscattering function or having a transmission/reception bandwidth of several resource blocks or less. Further, the Ambient loT Reader may be a wireless communication device having a communication function with an Ambient loT Device. The Ambient loT Device may also be referred to as an Ambient loT terminal, an loT terminal, an LPWA terminal, or a Tag.

### Hardware and Software Implementation of the present disclosure

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied. Computer-readable medium may be employed to implement the present disclosure, such as a memory storing instructions executable by processing circuitry, or storing other information, configuration registers storing configuration settings, etc., and various combinations thereof.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (loT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

### Further Aspects

According to a first aspect, provided is an Internet of Things, loT, device, comprising a transceiver which, in operation, receives a first message, the first message indicating group authentication data common to a group including the loT device; and circuitry which, in operation, performs authentication by determining whether or not a communication node is authenticated using the group authentication data, and determining device authentication data specific to the loT device, if it is determined that the communication node is authenticated, wherein the transceiver, in operation, transmits a second message indicating the device authentication data.

In an embodiment, the loT device comprises memory which, in operation, stores a group key associated with the group, wherein the group authentication data includes encrypted data; the first message further indicates first data; and the circuitry, in operation, decrypts the encrypted data using the group key to obtain second data, and determines that the communication node is not authenticated if the first data differs from the second data.

In an embodiment, the memory, in operation, stores a device key associated with the loT device; the circuitry, in operation, encrypts the first data using the device key, if it is determined that the communication node is authenticated; and the device authentication data includes the encrypted first data.

In an embodiment, the loT device comprises memory which, in operation, stores a group key associated with the group, wherein the group authentication data includes a first authentication token; the first message further indicates a function input value; the circuitry, in operation, obtains a second authentication token using the function input value, the group key, and a cryptographic function, determines that the communication node is not authenticated if the first authentication token differs from the second authentication token.

In an embodiment, the memory, in operation, stores a device key associated with the loT device; and the circuitry, in operation, determines a response token using the device key, the function input value, and a response derivation function; and the device authentication data includes the response token.

In an embodiment, the circuitry, in operation, determines a new device key using at least one output of the cryptographic function and a key derivation function.

In an embodiment, the loT device comprises memory which, in operation, stores association data associating at least one function input value with a pre-obtained authentication token, wherein the group authentication data includes a first authentication token; the first message further indicates a function input value; the circuitry, in operation, obtains a second authentication token using the function input value and the association data, and determines that the communication node is not authenticated if the first authentication token differs from the second authentication token.

In an embodiment, the association data further associates the function input value with a pre-obtained response token and/or a pre-obtained device key.

In an embodiment, the association data is an indexed table; and the circuitry, in operation, obtains the second authentication token, a response token and/or a device key by applying a predetermined index shuffling rule to the indexed table.

In an embodiment, the circuitry, in operation, encrypts a device identifier, ID, using a device key; and the second message further indicates the encrypted device ID.

In an embodiment, the transceiver, in operation, receives a trigger message indicating whether or not the authentication is required; and the circuitry, in operation, performs the authentication, if it is indicated that the authentication is required and the loT device supports authentication.

According to a second aspect, provided is a communication node, comprising circuitry which, in operation, obtains a group authentication data common to a group including an loT device; and a transceiver which, in operation, transmits a first message to each device included in the group, the first message indicating the group authentication data; and receives a second message indicating device authentication data from the loT device, wherein the circuitry, in operation, determines whether or not the loT device is authenticated using the device authentication data.

In an embodiment, the communication node comprises memory which, in operation, stores a group key associated with the group, wherein the circuitry, in operation, encrypts first data using the group key, wherein the group authentication data includes the encrypted data; and the first message further indicates the first data.

In an embodiment, the memory, in operation, stores device keys associated with loT devices included in the group.

In an embodiment, the communication node comprises memory which, in operation, stores a group key associated with the group, wherein the group authentication data includes a first authentication token; the first message further indicates a function input value; the circuitry, in operation, obtains the first authentication token using the function input value, the group key, and a cryptographic function.

In an embodiment, the memory, in operation, stores device keys associated with the loT device included in the group.

In an embodiment, the circuitry, in operation, determines a new device key using at least one output of the cryptographic function and a key derivation function.

In an embodiment, the second message further indicates the encrypted device ID; and the circuitry, in operation, decrypts the device identifier, ID, using a device key.

In an embodiment, the transceiver, in operation, transmits a trigger message indicating whether or not the authentication is required.

According to a third aspect, provided is a method for an Internet of Things, loT, device, comprising receiving a first message, the first message indicating group authentication data common to a group including the loT device; performing authentication by determining whether or not a communication node is authenticated using the group authentication data, and determining device authentication data specific to the loT device, if it is determined that the communication node is authenticated; and transmitting a second message indicating the device authentication data.

In an embodiment, the method comprises storing a group key associated with the group, wherein the group authentication data includes encrypted data, wherein the first message further indicates first data; decrypting the encrypted data using the group key to obtain second data; and determining that the communication node is not authenticated if the first data differs from the second data.

In an embodiment, the method comprises storing a device key associated with the loT device; encrypting the first data using the device key, if it is determined that the communication node is authenticated; wherein the device authentication data includes the encrypted first data.

In an embodiment, the loT method comprises storing a group key associated with the group, wherein the group authentication data includes a first authentication token; the first message further indicates a function input value; obtaining a second authentication token using the function input value, the group key, and a cryptographic function; determining that the communication node is not authenticated if the first authentication token differs from the second authentication token.

In an embodiment, the method comprises storing a device key associated with the loT device; and determining a response token using the device key, the function input value, and a response derivation function; wherein the device authentication data includes the response token.

In an embodiment, the method comprises determining a new device key using at least one output of the cryptographic function and a key derivation function.

In an embodiment, the method comprises storing association data associating at least one function input value with a pre-obtained authentication token, wherein the group authentication data includes a first authentication token; wherein the first message further indicates a function input value; obtaining a second authentication token using the function input value and the association data; and determining that the communication node is not authenticated if the first authentication token differs from the second authentication token.

In an embodiment, the association data further associates the function input value with a pre-obtained response token and/or a pre-obtained device key.

In an embodiment, the association data is an indexed table; and the method comprises obtaining the second authentication token, a response token and/or a device key by applying a predetermined index shuffling rule to the indexed table.

In an embodiment, the method comprises encrypting a device identifier, ID, using a device key; wherein the second message further indicates the encrypted device ID.

In an embodiment, the method comprises receiving a trigger message indicating whether or not the authentication is required; and performing the authentication, if it is indicated that the authentication is required and the loT device supports authentication.

According to a fourth aspect, provided is a method for a communication node, comprising obtaining a group authentication data common to a group including an loT device; transmitting a first message to each device included in the group, the first message indicating the group authentication data; receiving a second message indicating device authentication data from the loT device; and determining whether or not the loT device is authenticated using the device authentication data.

In an embodiment, the method comprises storing a group key associated with the group; encrypting first data using the group key, wherein the group authentication data includes the encrypted data; and the first message further indicates the first data.

In an embodiment, the method comprises storing device keys associated with loT devices included in the group.

In an embodiment, the method comprises storing a group key associated with the group, wherein the group authentication data includes a first authentication token; the first message further indicates a function input value; obtaining the first authentication token using the function input value, the group key, and a cryptographic function.

In an embodiment, the method comprises storing device keys associated with the loT device included in the group.

In an embodiment, the method comprises determining a new device key using at least one output of the cryptographic function and a key derivation function.

In an embodiment, the second message further indicates the encrypted device ID; and the method comprises decrypting the device identifier, ID, using a device key.

In an embodiment, the method comprises transmitting a trigger message indicating whether or not the authentication is required.

According to a fifth aspect, provided is an Internet of Things, loT, device, comprising a transceiver which, in operation, receives a trigger message, wherein the trigger message indicates whether or not authentication is required; and circuitry which, in operation, determines whether or not a communication node is authenticated if it is indicated that authentication is required and the loT device supports authentication.

In an embodiment, the circuitry, in operation, performs a random access procedure if it is indicated that authentication is required, the loT device supports authentication, and it is determined that the communication node is authenticated, or if it is indicated that authentication is not required.

According to a sixth aspect, provided is a communication node, comprising a transceiver which, in operation, transmits a trigger message to an Internet of Things, loT, device, wherein the trigger message indicates whether or not authentication is required; and circuitry which, in operation, determines whether or not the loT device is authenticated if it is indicated that authentication is required and the loT device supports authentication.

In an embodiment, the circuitry, in operation, performs a random access procedure if it is indicated that authentication is required, the loT device supports authentication, and it is determined that the loT device is authenticated, or if it is indicated that authentication is not required.

According to a seventh aspect, provided is a method for an loT device, comprising receiving a trigger message, wherein the trigger message indicates whether or not authentication is required; and determining whether or not a communication node is authenticated if it is indicated that authentication is required and the loT device supports authentication.

In an embodiment, the method comprises performing a random access procedure if it is indicated that authentication is required, the loT device supports authentication, and it is determined that the communication node is authenticated, or if it is indicated that authentication is not required.

According to an eighth aspect, provided is a method for a communication node, comprising transmitting a trigger message to an Internet of Things, loT, device, wherein the trigger message indicates whether or not authentication is required; and determining whether or not the loT device is authenticated if it is indicated that authentication is required and the loT device supports authentication.

In an embodiment, the method comprises performing a random access procedure if it is indicated that authentication is required, the loT device supports authentication, and it is determined that the loT device is authenticated, or if it is indicated that authentication is not required.

According to a ninth aspect, provided is an Internet of Things, loT, device associated with a first device identifier unique among a plurality of device identifiers associated with a respective plurality of loT devices, wherein the loT device is included in a group associated with a group identifier, comprising a transceiver which, in operation, receives a first message from a communication node, indicating the group identifier; and circuitry which, in operation, determines a second device identifier, the second device identifier having a smaller data size than the first device identifier, wherein the transceiver, in operation, transmits a second message indicating the second device identifier to the communication node.

In an embodiment, the second device identifier is obtained by truncating the first device identifier.

In an embodiment, the second device identifier is obtained by truncating the first device identifier to a number of bits; and the number of bits is predetermined, associated with the group ID, or indicated in the first message.

In an embodiment, the loT device is assigned a temporary device identifier having a smaller data size than the first device identifier; and the circuitry, in operation, determines the temporary device identifier as the second device identifier.

In an embodiment, the transceiver, in operation, receives an authentication request indicating an authentication challenge from the communication node; the circuitry, in operation, performs authentication of the communication node; and if the communication node is authenticated successfully, the circuitry, in operation, determines authentication response data; and the transceiver, in operation, transmits an authentication response indicating the authentication response data to the communication node.

In an embodiment, if the communication node is authenticated successfully the circuitry, in operation, encrypts the first device identifier using a device key associated with the loT device; and the transceiver, in operation, transmits the encrypted first device identifier to the communication node.

In an embodiment, if the communication node is not authenticated successfully, the transceiver, in operation, transmits an authentication response indicating that authentication of the communication node has failed.

In an embodiment, the loT device comprises memory which, in operation, stores association data associating the authentication challenge with the authentication response data.

In an embodiment, the circuitry, in operation, determines the authentication response data using a device key associated with the loT device, the authentication challenge, and a response derivation function.

According to a tenth aspect, provided is a communication node, comprising circuitry and a transceiver, wherein the transceiver, in operation, transmits a first message to an Internet of Things, loT device, indicating a group identifier, wherein the loT device is associated with a first device identifier unique among a plurality of device identifiers associated with a respective plurality of loT devices, and the loT device is included in the group associated with the group identifier; and the transceiver, in operation, receives a second message from the loT device, indicating a second device identifier having a smaller data size than the first device identifier.

In an embodiment, the circuitry, in operation, determines whether the loT device can be uniquely identified within the group using the second device identifier.

In an embodiment, if it is determined that the loT device can be uniquely identified within the group using the second device identifier, the circuitry, in operation, determines an authentication challenge using a device key associated with the loT device; the transceiver, in operation, transmits an authentication request indicating the authentication challenge to the loT device, and receives an authentication response indicating authentication response data and an encrypted first device identifier; and the circuitry, performs authentication of the loT device using the authentication response data, and decrypts the first device identifier using the device key associated with the loT device.

In an embodiment, if it is determined that the loT device cannot be uniquely identified within the group using the second device identifier, the circuitry, in operation, determines a subset of loT devices included in the group and compliant with the second device identifier; determines a plurality of authentication challenges, using respective device keys associated the subset of loT devices; and the transceiver, in operation, transmits at least one authentication request indicating the determined authentication challenges to the loT device; receives at least one authentication response from the loT device indicating authentication response data and an encrypted first device identifier; and the circuitry, in operation, identifies the loT device based on the device key used for determination of the authentication challenge, for which the authentication response indicates the authentication response data and the encrypted first device identifier.

In an embodiment, the transceiver, in operation, receives at least one authentication response from the loT device indicating that authentication of the communication node has failed; and the circuitry, in operation, determines that the loT device is different from an loT device associated with the device key used for determination of the authentication challenge, for which the authentication response indicates that authentication of the communication node has failed

In an embodiment, the circuitry, in operation, performs authentication of the loT device using the authentication response data, and decrypts the first device identifier using the first device key.

According to an eleventh aspect, provided is a method for an Internet of Things, loT, device associated with a first device identifier unique among a plurality of device identifiers associated with a respective plurality of loT devices, wherein the loT device is included in a group associated with a group identifier, comprising receiving a first message from a communication node, indicating the group identifier; determining a second device identifier, the second device identifier having a smaller data size than the first device identifier; and transmitting a second message indicating the second device identifier to the communication node.

In an embodiment, the second device identifier is obtained by truncating the first device identifier.

In an embodiment, the second device identifier is obtained by truncating the first device identifier to a number of bits; and the number of bits is predetermined, associated with the group ID, or indicated in the first message.

In an embodiment, the loT device is assigned a temporary device identifier having a smaller data size than the first device identifier; and the method comprises determining the temporary device identifier as the second device identifier.

In an embodiment, the method comprises receiving an authentication request indicating an authentication challenge from the communication node; performing authentication of the communication node; and if the communication node is authenticated successfully, determining authentication response data; and transmitting an authentication response indicating the authentication response data to the communication node.

In an embodiment, if the communication node is authenticated successfully, the method comprises encrypting the first device identifier using a device key associated with the loT device; and transmitting the encrypted first device identifier to the communication node.

In an embodiment, if the communication node is not authenticated successfully, the method comprises transmitting an authentication response indicating that authentication of the communication node has failed.

In an embodiment, the method comprises storing association data associating the authentication challenge with the authentication response data.

In an embodiment, the method comprises determining the authentication response data using a device key associated with the loT device, the authentication challenge, and a response derivation function.

According to a twelfth aspect, provided is a method for a communication node, comprising transmitting a first message to an Internet of Things, loT device, indicating a group identifier, wherein the loT device is associated with a first device identifier unique among a plurality of device identifiers associated with a respective plurality of loT devices, and the loT device is included in the group associated with the group identifier; and the receiving a second message from the loT device, indicating a second device identifier having a smaller data size than the first device identifier.

In an embodiment, the method comprises determining whether the loT device can be uniquely identified within the group using the second device identifier.

In an embodiment, if it is determined that the loT device can be uniquely identified within the group using the second device identifier, the method comprises determining an authentication challenge using a device key associated with the loT device; transmitting an authentication request indicating the authentication challenge to the loT device; receiving an authentication response indicating authentication response data and an encrypted first device identifier; performing authentication of the loT device using the authentication response data; and decrypting the first device identifier using the device key associated with the loT device.

In an embodiment, if it is determined that the loT device cannot be uniquely identified within the group using the second device identifier, the method comprises determining a subset of loT devices included in the group and compliant with the second device identifier; determining a plurality of authentication challenges, using respective device keys associated the subset of loT devices; transmitting at least one authentication request indicating the determined authentication challenges to the loT device; receiving at least one authentication response from the loT device indicating authentication response data and an encrypted first device identifier; and identifying the loT device based on the device key used for determination of the authentication challenge, for which the authentication response indicates the authentication response data and the encrypted first device identifier.

In an embodiment, the method comprises receiving at least one authentication response from the loT device indicating that authentication of the communication node has failed; determining that the loT device is different from an loT device associated with the device key used for determination of the authentication challenge, for which the authentication response indicates that authentication of the communication node has failed

In an embodiment, the method comprises performing authentication of the loT device using the authentication response data; and decrypting the first device identifier using the first device key.

Moreover, in an embodiment, a computer program is provided including code instructions stored on a non-transitory medium, which when executed on one or more processor, causes the one or more processors to execute a method according to any of the above-mentioned embodiments and examples.

## Claims

1. An Internet of Things, loT, device associated with a first device identifier unique among a plurality of device identifiers associated with a respective plurality of loT devices, wherein the loT device is included in a group associated with a group identifier, comprising
a transceiver which, in operation, receives a first message from a communication node, indicating the group identifier; and
circuitry which, in operation, determines a second device identifier, the second device identifier having a smaller data size than the first device identifier, wherein
the transceiver, in operation, transmits a second message indicating the second device identifier to the communication node.

2. The loT device according to claim 1, wherein
the second device identifier is obtained by truncating the first device identifier.

3. The loT device according to claim 2, wherein
the second device identifier is obtained by truncating the first device identifier to a number of bits; and
the number of bits is predetermined, associated with the group ID, or indicated in the first message.

4. The loT device according to claim 1, wherein
the loT device is assigned a temporary device identifier having a smaller data size than the first device identifier; and
the circuitry, in operation, determines the temporary device identifier as the second device identifier.

5. The loT device according to any one of claims 1 to 4, wherein
the transceiver, in operation, receives an authentication request indicating an authentication challenge from the communication node;
the circuitry, in operation, performs authentication of the communication node; and
if the communication node is authenticated successfully,
the circuitry, in operation, determines authentication response data; and
the transceiver, in operation, transmits an authentication response indicating the authentication response data to the communication node.

6. The loT device according to claim 5, wherein if the communication node is authenticated successfully
the circuitry, in operation, encrypts the first device identifier using a device key associated with the loT device; and
the transceiver, in operation, transmits the encrypted first device identifier to the communication node.

7. The loT device according to claim 5 or 6, wherein
if the communication node is not authenticated successfully, the transceiver, in operation, transmits an authentication response indicating that authentication of the communication node has failed.

8. The loT device according to any one of claims 5 to 7, comprising
memory which, in operation, stores association data associating the authentication challenge with the authentication response data.

9. The loT device according to any one of claims 5 to 7, wherein
the circuitry, in operation, determines the authentication response data using a device key associated with the loT device, the authentication challenge, and a response derivation function.

10. A communication node, comprising circuitry and a transceiver, wherein
the transceiver, in operation, transmits a first message to an Internet of Things, loT device, indicating a group identifier, wherein
the loT device is associated with a first device identifier unique among a plurality of device identifiers associated with a respective plurality of loT devices, and
the loT device is included in the group associated with the group identifier; and
the transceiver, in operation, receives a second message from the loT device, indicating a second device identifier having a smaller data size than the first device identifier.

11. The communication node according to claim 10, wherein
the circuitry, in operation, determines whether the loT device can be uniquely identified within the group using the second device identifier.

12. The communication node according to claim 11, wherein if it is determined that the loT device can be uniquely identified within the group using the second device identifier,
the circuitry, in operation, determines an authentication challenge using a device key associated with the loT device;
the transceiver, in operation,
transmits an authentication request indicating the authentication challenge to the loT device, and
receives an authentication response indicating authentication response data and an encrypted first device identifier; and
the circuitry,
performs authentication of the loT device using the authentication response data, and
decrypts the first device identifier using the device key associated with the loT device.

13. The communication node according to claim 11 or 12, wherein if it is determined that the loT device cannot be uniquely identified within the group using the second device identifier,
the circuitry, in operation,
determines a subset of loT devices included in the group and compliant with the second device identifier;
determines a plurality of authentication challenges, using respective device keys associated the subset of loT devices; and
the transceiver, in operation,
transmits at least one authentication request indicating the determined authentication challenges to the loT device;
receives at least one authentication response from the loT device indicating authentication response data and an encrypted first device identifier; and
the circuitry, in operation, identifies the loT device based on the device key used for determination of the authentication challenge, for which the authentication response indicates the authentication response data and the encrypted first device identifier.

14. The communication node according to any one of claims 11 to 13, wherein
the transceiver, in operation, receives at least one authentication response from the loT device indicating that authentication of the communication node has failed; and the circuitry, in operation, determines that the loT device is different from an loT device associated with the device key used for determination of the authentication challenge, for which the authentication response indicates that authentication of the communication node has failed

15. The communication node according to claim 12, wherein the circuitry, in operation,
performs authentication of the loT device using the authentication response data, and
decrypts the first device identifier using the device key associated with the identified loT device.
